# EUROPEAN PATENT APPLICATION

(11) **EP 4 769 875 A1**
(43) Date of publication of application: **01.07.2026**
(21) Application number: 24899582.1
(22) Date of filing: 14.11.2024
(51) Int. Cl.: H02J 7/00, H01M 10/48, H01M 10/42, H01M 10/46

(54) **ENERGY STORAGE SYSTEM HAVING COMMON-MODE ARC DETECTION FUNCTION, AND OPTICAL STORAGE DEVICE**

(30) Priority: 06.12.2023 CN 202311666111
(71) Applicant: Huawei Digital Power Technologies Co., Ltd., Shenzhen, Guangdong 518043 (CN)
(72) Inventor: WANG, Shuqin, Shenzhen, Guangdong 518043 (CN); CHEN, Baoguo, Shenzhen, Guangdong 518043 (CN); SHENG, Ren, Shenzhen, Guangdong 518043 (CN); FANG, Zhen, Shenzhen, Guangdong 518043 (CN)
(74) Representative: Epping - Hermann - Fischer
(86) International application number: PCT/CN2024/132012
(87) International publication number: WO 2025/118940

(57) **Abstract**

An energy storage system with a common-mode arcing detection function and a photovoltaic energy storage device are disclosed. The energy storage system includes a battery cluster (112), a common-mode current detection unit (1422), and a controller (141). The controller (141) is configured to: when a frequency domain component of a common-mode current detected by the common-mode current detection unit (1422) is greater than a first preset amplitude, control a path between the battery cluster (112) and an output end of the energy storage system to be cut off. In this way, accuracy and effectiveness of arcing phenomenon detection can be improved, to reduce a detection error and improve safety of using the energy storage system.

## Description

### CROSS-REFERENCE TO RELATED APPLICATIONS

This application claims priority to Chinese Patent Application No. 202311666111.1, filed with the China National Intellectual Property Administration on December 6, 2023 and entitled "ENERGY STORAGE SYSTEM WITH COMMON-MODE ARCING DETECTION FUNCTION, AND PHOTOVOLTAIC ENERGY STORAGE DEVICE", which is incorporated herein by reference in its entirety.

### TECHNICAL FIELD

This application relates to the field of new energy technologies, and in particular, to an energy storage system with a common-mode arcing detection function and a photovoltaic energy storage device.

### BACKGROUND

As a bidirectional energy exchange product, an energy storage system may serve as a backup power supply, and may also smooth power on a power generation side, and achieve peak shaving and valley filling on a user side. Electrical safety of the energy storage system, as an energy source, is quite important. With an increase in running time, failures such as poor contact, aging of a component or an insulation layer, and electric leakage may occur in the energy storage system, leading to an increase in a possibility of arcing in the energy storage system. A spark and high temperature caused by the arcing is likely to cause a fire in the energy storage system. This greatly degrades safety of using the energy storage system. Therefore, how to effectively and accurately detect an arcing phenomenon in the energy storage system becomes a problem that urgently needs to be resolved.

### SUMMARY

This application provides an energy storage system with a common-mode arcing detection function and a photovoltaic energy storage device, to effectively and accurately detect an arcing phenomenon in an energy storage system, and improve safety of using the energy storage system. According to a first aspect, an embodiment of this application provides an energy storage system. The energy storage system includes a battery cluster, a common-mode current detection unit, and a controller. The battery cluster includes at least two battery modules. The at least two battery modules are connected in series. One end of the common-mode current detection unit is connected to a positive output end of the battery cluster, and the other end of the common-mode current detection unit is connected to a negative output end of the battery cluster. The common-mode current detection unit is configured to detect a common-mode current in a connected circuit. The controller is configured to: when a frequency domain component of the common-mode current is greater than a first preset amplitude, control a path between the output end of the battery cluster and an output end of the energy storage system to be cut off. It should be understood that the first preset amplitude may be determined based on a frequency domain component of a corresponding current generated when an arcing phenomenon occurs, to avoid occurrence of and eliminate an arcing phenomenon. A specific value is not limited herein.

In this way, the controller can analyze the common-mode current. Because a current has a plurality of frequency domain components, each frequency domain component of the common-mode current may be determined. A current generated when arcing occurs has the following features: Different frequency domain components are different from each other; each frequency domain component varies greatly; and some frequency domain components may be large, and some frequency domain components may be small. A current generated when no arcing occurs has the following features: Different frequency domain components are all 0, and there is no large frequency domain component. Therefore, each determined frequency domain component may be analyzed. A frequency domain component being greater than the first preset amplitude indicates that the common-mode current includes a large frequency domain component. In this case, it can be determined that the common-mode current is a current generated when arcing occurs. In other words, it can be determined that an arcing phenomenon currently occurs. This improves accuracy and effectiveness of arcing phenomenon detection, and reduces a detection error. In addition, the controller may control the path between the battery cluster and the output end of the energy storage system to be cut off, to implement an arc extinguishing action or a protection action. In this way, when an arcing phenomenon occurs, an arc extinguishing measure can be taken in a timely manner, to improve safety of using the energy storage system.

It should be noted that the common-mode current detection unit may detect a current (denoted as a current a) flowing out of the positive output end and a current (denoted as a current b) flowing into the negative output end. A difference between the current a and the current b being 0 indicates that the current flowing out of the positive output end is equal to the current flowing into the negative output end. Therefore, there is no residual current. In other words, there is no leakage current. In this case, no arcing phenomenon occurs, and the common-mode current is 0. A difference between the current a and the current b being not 0 indicates that there is a residual current. In other words, there is a leakage current. In this case, the common-mode current is not 0. If sparking occurs when the common-mode current is not 0, different frequency domain amplitudes of the common-mode current vary greatly. When the frequency domain component is greater than the first preset amplitude, it can be determined that an arcing phenomenon occurs. Therefore, existence of a leakage current does not necessarily indicate occurrence of an arcing phenomenon. However, an arcing phenomenon is quite likely to occur if sparking occurs when there is a leakage current. Therefore, whether an arcing phenomenon occurs may be determined by comparing the frequency domain component of the common-mode current with the first preset amplitude.

Optionally, the energy storage system may further include a differential-mode current detection unit. The differential-mode current detection unit is connected to the positive output end or the negative output end of the battery cluster. The differential-mode current detection unit is configured to detect a differential-mode current in a connected circuit. The controller is further configured to: when a frequency domain component of the differential-mode current is greater than a second preset amplitude, control the path between the output end of the battery cluster and the output end of the energy storage system to be cut off. Similar to the case of the common-mode current, the frequency domain component of the differential-mode current being greater than the second preset amplitude indicates that the differential-mode current includes a large frequency domain component. In this case, it can be determined that the differential-mode current is a current generated when arcing occurs. In other words, it can be determined that an arcing phenomenon currently occurs. This improves accuracy and effectiveness of arcing phenomenon detection, and reduces a detection error. It should be understood that the second preset amplitude may be determined based on a frequency domain component of a corresponding current generated when an arcing phenomenon occurs, to avoid occurrence of and eliminate an arcing phenomenon. A specific value is not limited herein.

The differential-mode current detection unit may include a positive differential-mode current detection unit, or the differential-mode current detection unit may include a negative differential-mode current detection unit, or the differential-mode current detection unit includes a positive differential-mode current detection unit and a negative differential-mode current detection unit. A specific structure of the differential-mode current detection unit may be arranged based on an actual case, and is not limited herein. When the differential-mode current detection unit includes the positive differential-mode current detection unit and the negative differential-mode current detection unit, determining may be performed based on all of a positive differential-mode current, a negative differential-mode current, and the common-mode current, to further improve accuracy and effectiveness of arcing phenomenon detection, and reduce a detection error.

The positive differential-mode current detection unit may detect a current a, where the current a may be considered as the positive differential-mode current. The negative differential-mode current detection unit may detect a current b, where the current b may be considered as the negative differential-mode current. When sparking occurs, different frequency domain amplitudes of the current a and the current b vary greatly. When a frequency domain component of the current a or the current b is greater than the second preset amplitude, it can be determined that an arcing phenomenon occurs. Therefore, whether an arcing phenomenon occurs may also be determined by detecting the positive differential-mode current or the negative differential-mode current.

In addition, in addition to the battery cluster, a detection apparatus, and the controller, the energy storage system may further include a DC-DC conversion circuit. A positive input end of the DC-DC conversion circuit is connected to the positive output end of the battery cluster, and a negative input end of the DC-DC conversion circuit is connected to the negative output end of the battery cluster. In this case, positions of the positive differential-mode current detection unit, the negative differential-mode current detection unit, and the common-mode current detection unit may be arranged in the following cases.

For the positive differential-mode current detection unit: The positive differential-mode current detection unit is connected to the positive input end of the DC-DC conversion circuit. In this case, the positive differential-mode current detection unit may detect a differential-mode current at the positive input end of the DC-DC conversion circuit. Because the positive input end of the DC-DC conversion circuit is connected to the positive output end of the battery cluster, the current detected by the positive differential-mode current detection unit at the positive input end of the DC-DC conversion circuit may be considered as a differential-mode current at the positive output end of the battery cluster. Therefore, when an arcing phenomenon occurs at the positive output end of the battery cluster, the arcing phenomenon may be detected as early as possible, and a protection measure may be taken in a timely manner, to avoid damage to the battery cluster and the DC-DC conversion circuit, and further improve safety of using the energy storage system. Alternatively, the positive differential-mode current detection unit is connected to a positive output end of the DC-DC conversion circuit. In this case, the positive differential-mode current detection unit may detect a differential-mode current at the positive output end of the DC-DC conversion circuit. Therefore, when an arcing phenomenon occurs at the positive output end of the DC-DC conversion circuit, the arcing phenomenon may be detected as early as possible, and a protection measure may be taken in a timely manner, to avoid damage to the DC-DC conversion circuit and a DC-AC conversion circuit, and further improve safety of using the energy storage system. A specific implementation structure of the positive differential-mode current detection unit may be any structure that can implement a positive differential-mode current detection function and that is well known to persons skilled in the art, for example, but not limited to, any one of a shunt and a current transformer. This is not specifically limited herein.

For the negative differential-mode current detection unit: The negative differential-mode current detection unit is connected to the negative input end of the DC-DC conversion circuit. In this case, the negative differential-mode current detection unit may detect a differential-mode current at the negative input end of the DC-DC conversion circuit. Because the negative input end of the DC-DC conversion circuit is connected to the negative output end of the battery cluster, the current detected by the negative differential-mode current detection unit at the negative input end of the DC-DC conversion circuit may be considered as a differential-mode current at the negative output end of the battery cluster. Therefore, when an arcing phenomenon occurs at the negative output end of the battery cluster, the arcing phenomenon may be detected as early as possible, and a protection measure may be taken in a timely manner, to avoid damage to the battery cluster and the DC-DC conversion circuit, and further improve safety of using the energy storage system. Alternatively, the negative differential-mode current detection unit is connected to a negative output end of the DC-DC conversion circuit. In this case, the negative differential-mode current detection unit may detect a differential-mode current at the negative output end of the DC-DC conversion circuit. Therefore, when an arcing phenomenon occurs at the negative output end of the DC-DC conversion circuit, the arcing phenomenon may be detected as early as possible, and a protection measure may be taken in a timely manner, to avoid damage to the DC-DC conversion circuit and the DC-AC conversion circuit, and further improve safety of using the energy storage system. A specific implementation structure of the negative differential-mode current detection unit may be any structure that can implement a negative differential-mode current detection function and that is well known to persons skilled in the art, for example, but not limited to, any one of a shunt and a current transformer. This is not specifically limited herein.

For the common-mode current detection unit: One end of the common-mode current detection unit is connected to the positive input end of the DC-DC conversion circuit, and the other end of the common-mode current detection unit is connected to the negative input end of the DC-DC conversion circuit. In this case, the common-mode current detection unit detects a common-mode current between the positive input end of the DC-DC conversion circuit and the negative input end of the DC-DC conversion circuit. The positive input end of the DC-DC conversion circuit is connected to the positive output end of the battery cluster, and the negative input end of the DC-DC conversion circuit is connected to the negative output end of the battery cluster. Therefore, the common-mode current detected by the common-mode current detection unit between the positive input end of the DC-DC conversion circuit and the negative input end of the DC-DC conversion circuit may be considered as a common-mode current between the positive output end of the battery cluster and the negative output end of the battery cluster. Therefore, when an arcing phenomenon occurs at the positive output end and the negative output end of the battery cluster, the arcing phenomenon may be detected as early as possible, and a protection measure may be taken in a timely manner, to avoid damage to the battery cluster and the DC-DC conversion circuit, and further improve safety of using the energy storage system. Alternatively, one end of the common-mode current detection unit is connected to the positive output end of the DC-DC conversion circuit, and the other end of the common-mode current detection unit is connected to the negative output end of the DC-DC conversion circuit. In this case, the common-mode current detection unit detects a common-mode current between the positive output end of the DC-DC conversion circuit and the negative output end of the DC-DC conversion circuit. Therefore, when an arcing phenomenon occurs at the positive output end and the negative output end of the DC-DC conversion circuit, the arcing phenomenon may be detected as early as possible, and a protection measure may be taken in a timely manner, to avoid damage to the DC-DC conversion circuit and the DC-AC conversion circuit, and further improve safety of using the energy storage system. A specific implementation structure of the common-mode current detection unit may be any structure that can implement a common-mode current detection function and that is well known to persons skilled in the art, for example, but not limited to, a residual current operated protective device, a current transformer, or a Hall effect sensor. This is not specifically limited herein.

Optionally, when controlling the path between the battery cluster and the output end of the energy storage system to be cut off, the controller may be specifically configured to: When the frequency domain component of the common-mode current is greater than the first preset amplitude, control the DC-DC conversion circuit not to output a direct current. In this way, even if the battery cluster outputs electric energy to the DC-DC conversion circuit, because the DC-DC conversion circuit does not output a direct current to the outside, the electric energy output by the battery cluster is not output to the outside through the DC-DC conversion circuit. In this way, the path between the battery cluster and the output end of the energy storage system is cut off. The DC-DC conversion circuit may include a plurality of transistors. The controller controls, to be turned off, a transistor among the plurality of transistors that is configured to output a direct current to the outside, so that the DC-DC conversion circuit does not output a direct current to the outside. A connection relationship and an arrangement manner of the transistors may be determined according to an actual requirement. This is not limited herein.

Certainly, when the energy storage system further includes the DC-AC conversion circuit, a positive input end of the DC-AC conversion circuit is connected to the positive output end of the DC-DC conversion circuit, and a negative input end of the DC-AC conversion circuit is connected to the negative output end of the DC-DC conversion circuit, the controller may be further specifically configured to: when the frequency domain component of the common-mode current is greater than the first preset amplitude, control the DC-AC conversion circuit not to output an alternating current. In this way, even if the battery cluster outputs electric energy to the DC-DC conversion circuit and the DC-DC conversion circuit outputs electric energy to the DC-AC conversion circuit, because the DC-AC conversion circuit does not output an alternating current to the outside, the electric energy output by the battery cluster is not output to the outside through the DC-AC conversion circuit. In this way, the path between the battery cluster and the output end of the energy storage system is cut off. The DC-AC conversion circuit may also include a plurality of transistors. The controller controls, to be turned off, a transistor among the plurality of transistors that is configured to output an alternating current to the outside, so that the DC-AC conversion circuit does not output an alternating current to the outside. A connection relationship and an arrangement manner of the transistors may be determined according to an actual requirement. This is not limited herein.

Optionally, in addition to the differential-mode current detection unit and the common-mode current detection unit, the detection apparatus may further include a voltage detection unit. A first end of the voltage detection unit is connected to the positive output end of the battery cluster, a second end of the voltage detection unit is connected to the negative output end of the battery cluster, and a third end of the voltage detection unit is connected to the controller. In this case, the voltage detection unit is configured to collect a voltage between the positive output end of the battery cluster and the negative output end of the battery cluster, and transmit the voltage to the controller. Alternatively, a first end of the voltage detection unit is connected to the positive output end of the DC-DC conversion circuit, a second end of the voltage detection unit is connected to the negative output end of the DC-DC conversion circuit, and a third end of the voltage detection unit is connected to the controller. In this case, the voltage detection unit is configured to collect a voltage between the positive output end of the DC-DC conversion circuit and the negative output end of the DC-DC conversion circuit, and transmit the voltage to the controller. In this case, the controller may be further configured to report the voltage in response to a reporting instruction. To be specific, the controller may store the received voltage, and report the voltage to a server when receiving a reporting instruction delivered by the server. In this way, the server can monitor and analyze a running status of the energy storage system, to provide a data reference for maintaining or repairing the energy storage system, to improve maintenance and repair efficiency. It should be understood that a specific implementation structure of the voltage detection unit may be any structure that can implement a voltage detection function and that is well known to persons skilled in the art, for example, but not limited to, a voltage divider resistor. This is not specifically limited herein.

Optionally, the energy storage system may further include a first switch and a second switch. One end of the first switch is connected to the positive output end of the battery cluster, and the other end of the first switch is connected to the positive input end of the DC-AC conversion circuit. One end of the second switch is connected to the negative output end of the battery cluster, and the other end of the second switch is connected to the negative input end of the DC-AC conversion circuit. The controller may be further configured to: when the frequency domain component of the common-mode current is greater than the first preset amplitude, control the first switch and the second switch to be turned off. In this way, a conductive path between the positive output end of the battery cluster and the positive input end of the DC-AC conversion circuit can be cut off, and a conductive path between the negative output end of the battery cluster and the negative input end of the DC-AC conversion circuit can be cut off, to effectively cut off a power supply path through which the battery cluster outputs electric energy to the outside. This disconnects the battery cluster from the power supply path, suppresses continuous arcing, and further improves safety of using the energy storage system.

A specific arrangement position of the first switch may include: One end of the first switch is connected to the positive output end of the battery cluster, and the other end of the first switch is connected to the positive input end of the DC-DC conversion circuit. In this way, when the first switch is turned off, a conductive path between the positive output end of the battery cluster and the positive input end of the DC-DC conversion circuit can be cut off; or when the first switch is turned on, the positive output end of the battery cluster can be connected to the positive input end of the DC-DC conversion circuit. Therefore, connection or disconnection between the positive output end of the battery cluster and the positive input end of the DC-DC conversion circuit may be controlled by turning on or turning off the first switch, so that the positive output end of the battery cluster can be disconnected from the positive input end of the DC-DC conversion circuit in a timely manner when an arcing phenomenon occurs. Alternatively, one end of the first switch is connected to the positive output end of the DC-DC conversion circuit, and the other end of the first switch is connected to the positive input end of the DC-AC conversion circuit. In this way, when the first switch is turned off, a conductive path between the positive output end of the DC-DC conversion circuit and the positive input end of the DC-AC conversion circuit can be cut off; or when the first switch is turned on, the positive output end of the DC-DC conversion circuit can be connected to the positive input end of the DC-AC conversion circuit. Therefore, connection or disconnection between the positive output end of the DC-DC conversion circuit and the positive input end of the DC-AC conversion circuit may be controlled by turning on or turning off the first switch. In this way, when an arcing phenomenon occurs, the positive output end of the DC-DC conversion circuit can be disconnected from the positive input end of the DC-AC conversion circuit in a timely manner.

A specific arrangement position of the second switch may include: One end of the second switch is connected to the negative output end of the battery cluster, and the other end of the first switch is connected to the negative input end of the DC-DC conversion circuit. In this case, when the second switch is turned off, a conductive path between the negative output end of the battery cluster and the negative input end of the DC-DC conversion circuit may be cut off; or when the second switch is turned on, the negative output end of the battery cluster may be connected to the negative input end of the DC-DC conversion circuit. Therefore, connection or disconnection between the negative output end of the battery cluster and the negative input end of the DC-DC conversion circuit may be controlled by turning on or turning off the second switch. In this way, when an arcing phenomenon occurs, the negative output end of the battery cluster can be disconnected from the negative input end of the DC-DC conversion circuit in a timely manner. Alternatively, one end of the second switch is connected to the negative output end of the DC-DC conversion circuit, and the other end of the second switch is connected to the negative input end of the DC-AC conversion circuit. In this case, when the second switch is turned off, a conductive path between the negative output end of the DC-DC conversion circuit and the negative input end of the DC-AC conversion circuit may be cut off; or when the second switch is turned on, the negative output end of the DC-DC conversion circuit may be connected to the negative input end of the DC-AC conversion circuit. Therefore, connection or disconnection between the negative output end of the DC-DC conversion circuit and the negative input end of the DC-AC conversion circuit may be controlled by turning on or turning off the second switch. In this way, when an arcing phenomenon occurs, the negative output end of the DC-DC conversion circuit can be disconnected from the negative input end of the DC-AC conversion circuit in a timely manner.

Based on this, based on the foregoing position arrangements of the first switch and the second switch, when an arcing phenomenon occurs, the output end of the battery cluster may be disconnected from the input end of the DC-DC conversion circuit in a timely manner through the first switch and the second switch, so that both output ends of the battery cluster are disconnected from the conductive path. Alternatively, when an arcing phenomenon occurs, the output end of the DC-DC conversion circuit may be disconnected from the input end of the DC-AC conversion circuit in a timely manner through the first switch and the second switch, so that both output ends of the DC-DC conversion circuit are disconnected from the conductive path. In this way, the power supply path through which the battery cluster outputs electric energy to the outside can be effectively cut off, to suppress continuous arcing.

In addition, the first switch may be at least one of a relay and a contactor. For example, the first switch is a relay, or the first switch is a contactor, or the first switch is a relay and a contactor. Similarly, the second switch may also be at least one of a relay and a contactor. For example, the second switch is a relay, or the second switch is a contactor, or the second switch is a relay and a contactor.

Optionally, the energy storage system may further include a first protective device and a second protective device. One end of the first protective device is connected to the positive output end of the battery cluster, and the other end of the first protective device is connected to the positive input end of the DC-AC conversion circuit. When a current in a line connected to the first protective device exceeds a first preset current, the first protective device is turned off; otherwise, the first protective device remains on. One end of the second protective device is connected to the negative output end of the battery cluster, and the other end of the second protective device is connected to the negative input end of the DC-AC conversion circuit. When a current in a line connected to the second protective device exceeds a second preset current, the second protective device is turned off; otherwise, the second protective device remains on. In this way, a path controlled by the first protective device and a path controlled by the second protective device can be cut off by the first protective device and the second protective device respectively, to avoid damage to the battery cluster, the DC-DC conversion circuit, and the DC-AC conversion circuit when a current is excessively large, and improve reliability of the energy storage system. It should be understood that the first preset current and the second preset current may be set based on a maximum current that the battery cluster, the DC-DC conversion circuit, and the DC-AC conversion circuit can withstand, to avoid damage to the battery cluster, the DC-DC conversion circuit, and the DC-AC conversion circuit. Specific values are not limited herein.

A specific arrangement position of the first protective device may include: One end of the first protective device is connected to the positive output end of the battery cluster, and the other end of the first protective device is connected to the positive input end of the DC-DC conversion circuit. In this case, when the first protective device is turned off, the conductive path between the positive output end of the battery cluster and the positive input end of the DC-DC conversion circuit may be cut off; or when the first protective device is turned on, the positive output end of the battery cluster may be connected to the positive input end of the DC-DC conversion circuit. Therefore, connection or disconnection between the positive output end of the battery cluster and the positive input end of the DC-DC conversion circuit may be controlled by turning on or turning off the first protective device. In this way, when a current in a line between the positive output end of the battery cluster and the positive input end of the DC-DC conversion circuit exceeds the first preset current, the positive output end of the battery cluster is disconnected from the positive input end of the DC-DC conversion circuit in a timely manner, to avoid damage to the battery cluster and the DC-DC conversion circuit. Alternatively, one end of the first protective device is connected to the positive output end of the DC-DC conversion circuit, and the other end of the first protective device is connected to the positive input end of the DC-AC conversion circuit. In this case, when the first protective device is turned off, the conductive path between the positive output end of the DC-DC conversion circuit and the positive input end of the DC-AC conversion circuit may be cut off; or when the first protective device is turned on, the positive output end of the DC-DC conversion circuit may be connected to the positive input end of the DC-AC conversion circuit. Therefore, connection or disconnection between the positive output end of the DC-DC conversion circuit and the positive input end of the DC-AC conversion circuit may be controlled by turning on or turning off the first protective device. In this way, when a current in a line between the positive output end of the DC-DC conversion circuit of the battery cluster and the positive input end of the DC-AC conversion circuit exceeds the first preset current, the positive output end of the DC-DC conversion circuit is disconnected from the positive input end of the DC-AC conversion circuit in a timely manner, to avoid damage to the DC-DC conversion circuit and the DC-AC conversion circuit.

A specific arrangement position of the second protective device may include: One end of the second protective device is connected to the negative output end of the battery cluster, and the other end of the second protective device is connected to the negative input end of the DC-DC conversion circuit. In this case, when the second protective device is turned off, the conductive path between the negative output end of the battery cluster and the negative input end of the DC-DC conversion circuit may be cut off; or when the second protective device is turned on, the negative output end of the battery cluster may be connected to the negative input end of the DC-DC conversion circuit. Therefore, connection or disconnection between the negative output end of the battery cluster and the negative input end of the DC-DC conversion circuit may be controlled by turning on or turning off the second protective device. In this way, when a current in a line between the negative output end of the battery cluster and the negative input end of the DC-DC conversion circuit exceeds the second preset current, the negative output end of the battery cluster is disconnected from the negative input end of the DC-DC conversion circuit in a timely manner, to avoid damage to the battery cluster and the DC-DC conversion circuit. Alternatively, one end of the second protective device is connected to the negative output end of the DC-DC conversion circuit, and the other end of the second protective device is connected to the negative input end of the DC-AC conversion circuit. In this case, when the second protective device is turned off, a conductive path between the negative output end of the DC-DC conversion circuit and the negative input end of the DC-AC conversion circuit may be cut off; or when the second protective device is turned on, the negative output end of the DC-DC conversion circuit may be connected to the negative input end of the DC-AC conversion circuit. Therefore, connection or disconnection between the negative output end of the DC-DC conversion circuit and the negative input end of the DC-AC conversion circuit may be controlled by turning on or turning off the second protective device. In this way, when a current in a line between the negative output end of the DC-DC conversion circuit of the battery cluster and the negative input end of the DC-AC conversion circuit exceeds the second preset current, the negative output end of the DC-DC conversion circuit is disconnected from the negative input end of the DC-AC conversion circuit in a timely manner, to avoid damage to the DC-DC conversion circuit and the DC-AC conversion circuit.

In addition, the first protective device may be at least one of a fuse and a circuit breaker. For example, the first protective device is a fuse, or the first protective device is a circuit breaker, or the first protective device is a fuse and a circuit breaker. Similarly, the second protective device may also be at least one of a fuse and a circuit breaker. For example, the second protective device is a fuse, or the second protective device is a circuit breaker, or the second protective device is a fuse and a circuit breaker.

Further, if the energy storage system is provided with all of the first switch, the second switch, the first protective device, and the second protective device, the first switch and the first protective device may be connected in series between the positive output end of the battery cluster and the positive input end of the DC-DC conversion circuit, or connected in series between the positive output end of the DC-DC conversion circuit and the positive input end of the DC-AC conversion circuit. Similarly, the second switch and the second protective device may be connected in series between the negative output end of the battery cluster and the negative input end of the DC-DC conversion circuit, or connected in series between the negative output end of the DC-DC conversion circuit and the negative input end of the DC-AC conversion circuit. In addition, a positive differential-mode current corresponding to a case in which the frequency domain component is greater than the second preset amplitude is usually less than the first preset current, a negative differential-mode current corresponding to a case in which the frequency domain component is greater than the second preset amplitude is usually less than the second preset current, and a common-mode current corresponding to a case in which the frequency domain component is greater than the first preset amplitude is usually less than the first preset current and the second preset current. Therefore, when the path between the battery cluster and the output end of the energy storage system needs to be controlled to be cut off, a current at the positive output end of the battery cluster or the positive output end of the DC-DC conversion circuit may have not reached the first preset current, and a current at the negative output end of the battery cluster or the negative output end of the DC-DC conversion circuit may have not reached the second preset current. Therefore, before the path between the battery cluster and the output end of the energy storage system is cut off, the first protective device and the second protective device quite possibly have not cut off lines in which the first protective device and the second protective device are located. Therefore, the controller may cut off, by controlling the first switch and the second switch, a path through which the battery cluster supplies power to the outside, to disconnect the battery cluster from the power supply path, and suppress continuous arcing.

During startup of the energy storage system, if the battery cluster is not controlled not to output electric energy to the outside, the energy storage system operates normally, electric energy provided by the battery cluster is sequentially processed by the DC-DC conversion circuit and the DC-AC conversion circuit, and then electric energy is output to the outside. During normal operation, if the current at the positive output end of the battery cluster or the positive output end of the DC-DC conversion circuit exceeds the first preset current due to some causes, the first protective device cuts off a line in which the first protective device is located; and if the current at the negative output end of the battery cluster or the negative output end of the DC-DC conversion circuit exceeds the second preset current, the second protective device cuts off a line in which the second protective device is located, to protect the energy storage system during operation of the energy storage system, and improve safety and reliability of using the energy storage system.

According to a second aspect, an embodiment of this application further provides a battery cluster. The battery cluster may include one or more battery modules, a common-mode current detection unit, and a controller. The one or more battery modules are connected in series, and the battery modules connected in series may be referred to as a module combination. One end of the common-mode current detection unit is connected to a positive output end of the one or more battery modules (namely, the module combination), and the other end of the common-mode current detection unit is connected to a negative output end of the one or more battery modules (namely, the module combination). The common-mode current detection unit is configured to detect a common-mode current in a connected circuit. The controller is configured to: when a frequency domain component of the common-mode current is greater than a first preset amplitude, control the battery cluster not to output electric energy to the outside. In this way, the controller can determine the frequency domain component of the common-mode current, and when the frequency domain component of the common-mode current is greater than the first preset amplitude, the controller can control the module combination not to output electric energy to the outside, to implement an arc extinguishing action or a protection action. This can improve accuracy and effectiveness of arcing phenomenon detection, and reduce a detection error. When an arcing phenomenon occurs, an arc extinguishing measure may be taken in a timely manner, to improve safety of using the battery cluster.

Optionally, a specific implementation structure of the common-mode current detection unit may be any structure that can implement a common-mode current detection function and that is well known to persons skilled in the art, for example, but not limited to, a residual current operated protective device, a current transformer, or a Hall effect sensor. This is not specifically limited herein.

Optionally, the battery cluster may further include a differential-mode current detection unit. The differential-mode current detection unit is connected to the positive output end or the negative output end of the one or more battery modules (namely, the module combination). The differential-mode current detection unit is configured to detect a differential-mode current in a connected circuit. The controller is further configured to: when a frequency domain component of the differential-mode current is greater than a second preset amplitude, control the battery cluster not to output electric energy to the outside. In this way, both the differential-mode current and the common-mode current can be detected, to implement detection of a plurality of types of currents. Therefore, whether an arcing phenomenon occurs may be determined from a plurality of perspectives, to improve accuracy and effectiveness of arcing phenomenon detection, and reduce a detection error. When an arcing phenomenon occurs, an arc extinguishing measure may be taken in a timely manner, to improve safety of using the battery cluster.

The differential-mode current detection unit may include at least one of a positive differential-mode current detection unit and a negative differential-mode current detection unit. The positive differential-mode current detection unit is connected to the positive output end of the module combination. The positive differential-mode current detection unit may detect a positive differential-mode current at the positive output end of the module combination, and transmit the positive differential-mode current to the controller. The negative differential-mode current detection unit is connected to the negative output end of the module combination. The negative differential-mode current detection unit may detect a negative differential-mode current at the negative output end of the module combination, and transmit the negative differential-mode current to the controller. In this case, the controller is specifically configured to: when a frequency domain component of the positive differential-mode current is greater than the second preset amplitude, a frequency domain component of the negative differential-mode current is greater than the second preset amplitude, or the frequency domain component of the common-mode current is greater than the first preset amplitude, control the module combination not to output electric energy to the outside, to implement an arc extinguishing action or a protection action. It should be understood that a specific implementation structure of the positive differential-mode current detection unit may be any structure that can implement a positive differential-mode current detection function and that is well known to persons skilled in the art, for example, but not limited to, any one of a shunt and a current transformer. This is not specifically limited herein. A specific implementation structure of the negative differential-mode current detection unit may be any structure that can implement a negative differential-mode current detection function and that is well known to persons skilled in the art, for example, but not limited to, any one of a shunt and a current transformer. This is not specifically limited herein.

Optionally, the battery cluster may further include a first switch and a second switch. One end of the first switch is connected to the positive output end of one or more battery modules (namely, the module combination), and the other end of the first switch is connected to a positive output end of the battery cluster. One end of the second switch is connected to the negative output end of one or more battery modules (namely, the module combination), and the other end of the second switch is connected to a negative output end of the battery cluster. The controller is configured to: when the frequency domain component of the common-mode current is greater than the first preset amplitude, control the first switch and the second switch to be turned off. In this way, when determining that the battery cluster needs to be controlled not to output electric energy to the outside, the controller controls the first switch and the second switch to be turned off, to cut off a path controlled by the first switch and cut off a path controlled by the second switch, to effectively cut off a path through which the battery cluster supplies power to the outside. This disconnects the module combination from the power supply path, suppresses continuous arcing, and further improves safety of using the energy storage system. It should be understood that, to distinguish from a first switch disposed outside the battery cluster, the first switch disposed in the battery cluster may also be referred to as a third switch. Therefore, the third switch mentioned in this application is the first switch disposed in the battery cluster. Similarly, to distinguish from a second switch disposed outside the battery cluster, the second switch disposed in the battery cluster may also be referred to as a fourth switch. Therefore, the fourth switch mentioned in this application is the second switch disposed in the battery cluster.

Certainly, the battery cluster may be provided with or without a protective device. When a protective device is provided, the battery cluster may be further provided with a third protective device and a fourth protective device. One end of the third protective device is connected to the positive output end of the module combination, and the other end of the third protective device is connected to the positive output end of the battery cluster. When the third protective device is turned off, a conductive path between the positive output end of the module combination and the positive output end of the battery cluster may be cut off. When the third protective device is turned on, the positive output end of the module combination may be connected to the positive output end of the battery cluster. One end of the fourth protective device is connected to the negative output end of the module combination, and the other end of the fourth protective device is connected to the negative output end of the battery cluster. When the fourth protective device is turned off, a conductive path between the negative output end of the module combination and the negative output end of the battery cluster may be cut off. When the fourth protective device is turned on, the negative output end of the module combination may be connected to the negative output end of the battery cluster. In this way, when a current in a line connected to the third protective device exceeds a third preset current, the third protective device is turned off; otherwise, the third protective device remains on; and when a current in a line connected to the fourth protective device exceeds a fourth preset current, the fourth protective device is turned off; otherwise, the fourth protective device remains on. A path controlled by the third protective device and a path controlled by the fourth protective device may be cut off by the third protective device and the fourth protective device respectively, to avoid damage to the module combination and the battery cluster when a current is excessively large, and improve reliability of the energy storage system. It should be understood that the third preset current and the fourth preset current may be set based on a maximum current that the module combination and the battery cluster can withstand, to avoid damage to the battery cluster. Specific values are not limited herein.

Further, when the battery cluster is provided with the third switch, the fourth switch, the third protective device, and the fourth protective device, the third switch and the third protective device may be connected in series between the positive output end of the module combination and the positive output end of the battery cluster, and the fourth switch and the fourth protective device may be connected in series between the negative output end of the module combination and the negative output end of the battery cluster.

Optionally, when the battery cluster is provided with the controller and a controller is also disposed outside the battery cluster, the two controllers may be a same controller or different controllers. This may be specifically designed based on an actual case, and is not limited herein.

It should be understood that an implementation principle of the positive differential-mode current detection unit, an implementation principle of the negative differential-mode current detection unit, an implementation principle of the common-mode current detection unit, and implementations of the switches and the protective devices in this embodiment are basically the same as the implementation principle of the positive differential-mode current detection unit, the implementation principle of the negative differential-mode current detection unit, the implementation principle of the common-mode current detection unit, and the implementations of the switches and the protective devices described in the first aspect. For details, refer to related descriptions in any one of the first aspect or the embodiments of the first aspect. Repeated descriptions are omitted.

According to a third aspect, an embodiment of this application further provides an energy storage system. The energy storage system includes the battery cluster described in any one of the second aspect or the embodiments of the second aspect, and a power conversion circuit. The power conversion circuit is electrically connected to the battery cluster. The power conversion circuit is configured to convert a direct current provided by the battery cluster into an alternating current and then output the alternating current, or convert an input alternating current into a direct current and then output the direct current to the battery cluster. In this way, when safety of using the battery cluster is improved, safety of using the energy storage system can also be improved.

It should be understood that a problem-resolving principle of the energy storage system is similar to the foregoing problem-resolving principle of the battery cluster. Therefore, for implementation and technical effects of the energy storage system, refer to the foregoing implementation and technical effects of the battery cluster. Repeated descriptions are omitted.

According to a fourth aspect, an embodiment of this application further provides a photovoltaic energy storage device. The photovoltaic energy storage device includes a photovoltaic power generation apparatus, an inverter, and the energy storage system described in any one of the first aspect or the embodiments of the first aspect, or the energy storage system described in any one of the third aspect or the embodiments of the third aspect. The inverter is connected to the photovoltaic power generation apparatus and the energy storage system. The photovoltaic power generation apparatus is configured to generate a direct current. The inverter is configured to convert the direct current generated by the photovoltaic power generation apparatus into an alternating current, and then transmit the alternating current to the energy storage system. In this way, when safety of using the energy storage system is improved, safety of using the photovoltaic energy storage device can also be improved.

It should be understood that a problem-resolving principle of the photovoltaic energy storage device is similar to the foregoing problem-resolving principle of the energy storage system. Therefore, for implementation and technical effects of the photovoltaic energy storage device, refer to the foregoing implementation and technical effects of the energy storage system. Repeated descriptions are omitted.

### BRIEF DESCRIPTION OF DRAWINGS

FIG. 1 is a diagram of a structure of a photovoltaic energy storage device according to an embodiment of this application;
FIG. 2 is a diagram of a structure of an energy storage system according to an embodiment of this application;
FIG. 3 is a diagram of a structure of another energy storage system according to an embodiment of this application;
FIG. 4 is a diagram of a structure of still another energy storage system according to an embodiment of this application;
FIG. 5 is a diagram of a structure of yet another energy storage system according to an embodiment of this application;
FIG. 6 is a diagram of a structure of yet another energy storage system according to an embodiment of this application;
FIG. 7 is a diagram of a structure of yet another energy storage system according to an embodiment of this application;
FIG. 8 is a diagram of a structure of yet another energy storage system according to an embodiment of this application;
FIG. 9 is a diagram of a structure of yet another energy storage system according to an embodiment of this application;
FIG. 10 is a diagram of a structure of yet another energy storage system according to an embodiment of this application;
FIG. 11 is a diagram of a structure of yet another energy storage system according to an embodiment of this application; and
FIG. 12 is a diagram of a structure of yet another energy storage system according to an embodiment of this application.

### DESCRIPTION OF EMBODIMENTS

To make the objectives, technical solutions, and advantages of this application clearer, the following further describes this application in detail with reference to the accompanying drawings. It should be noted that identical reference numerals in the accompanying drawings of this application indicate identical or similar structures. Therefore, repeated descriptions thereof are omitted. Expressions of positions and directions in this application are described by using the accompanying drawings as an example. However, changes may alternatively be made as needed, and all the changes fall within the protection scope of this application. The accompanying drawings in this application are merely used to illustrate relative positional relationships and do not represent an actual scale.

For ease of understanding the technical solutions provided in embodiments of this application, the following first describes an application scenario of the technical solutions.

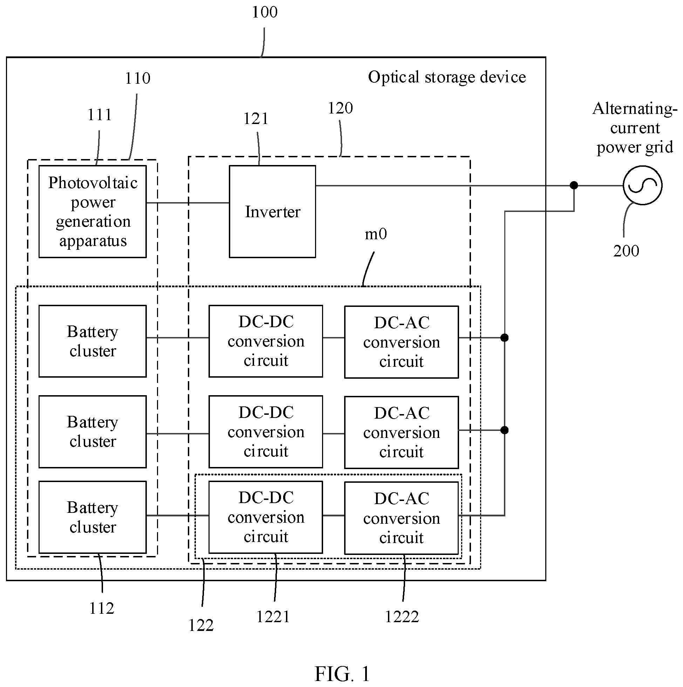

The technical solutions provided in embodiments of this application may be applied to a photovoltaic energy storage device. FIG. 1 is an example diagram of a possible network of the photovoltaic energy storage device 100. As shown in FIG. 1, the photovoltaic energy storage device 100 includes a direct-current source 110 and a power converter 120. The direct-current source 110 includes a photovoltaic power generation apparatus 111 and a battery cluster 112. The power converter 120 includes an inverter 121 and an energy storage converter 122. The inverter 121 is connected to the photovoltaic power generation apparatus 111, an alternating-current power grid 200, and the energy storage converter 122. The energy storage converter 122 is further connected to the battery cluster 112. The photovoltaic power generation apparatus 111 converts solar energy into a direct current through photovoltaic effect. The inverter 121 converts the direct current output by the photovoltaic power generation apparatus 111 into an alternating current, and further transmits the alternating current to the alternating-current power grid 200 and the energy storage converter 122. The energy storage converter 122 may convert the alternating current from the alternating-current power grid 200 and the inverter 121 into a direct current, and then transmit the direct current to the battery cluster 112 for storage, to store unstable electric energy from the photovoltaic power generation apparatus 111. Further, the energy storage converter 122 may output a stable alternating current to the alternating-current power grid 200.

As shown in FIG. 1, an energy storage system m0 may include the battery cluster 112 and the energy storage converter 122. The energy storage converter 122 may include a DC-DC conversion circuit and a DC-AC conversion circuit. One or more battery clusters may be disposed, and one or more energy storage converters may be disposed. When a plurality of battery clusters are disposed, a plurality of energy storage converters may be disposed, and a quantity of DC-DC conversion circuits is the same as a quantity of DC-AC conversion circuits. A positive output end of at least one battery cluster is connected to a positive input end of a DC-DC conversion circuit, and a negative output end of the at least one battery cluster is connected to a negative input end of the DC-DC conversion circuit. A positive output end of a DC-DC conversion circuit is connected to a positive input end of a DC-AC conversion circuit, a negative output end of the DC-DC conversion circuit is connected to a negative input end of the DC-AC conversion circuit, and an output end of the DC-AC conversion circuit is connected to the alternating-current power grid. When a plurality of battery clusters are disposed, one energy storage converter may be disposed. This is not shown in the figure. In this case, positive output ends of all the battery clusters are connected to a positive input end of the DC-DC conversion circuit, and negative output ends of all the battery clusters are connected to a negative input end of the DC-DC conversion circuit, so that the battery clusters are connected in parallel. In addition, a positive output end of the DC-DC conversion circuit is connected to a positive input end of the DC-AC conversion circuit, a negative output end of the DC-DC conversion circuit is connected to a negative input end of the DC-AC conversion circuit, and an output end of the DC-AC conversion circuit is connected to the alternating-current power grid.

As a bidirectional energy exchange product, the energy storage system m0 may serve as a backup power supply, and may also smooth power on a power generation side, and achieve peak shaving and valley filling on a user side. Electrical safety of the energy storage system m0, as an energy source, is quite important. With an increase in running time, failures such as poor contact, aging of a component or an insulation layer, and electric leakage may occur in the energy storage system m0, leading to an increase in a possibility of arcing in the energy storage system m0. A spark and high temperature caused by the arcing is likely to cause a fire in the energy storage system m0. This greatly degrades safety of using the energy storage system m0. It should be understood that, in an electric circuit, when a voltage between two conductors breaks down an air layer to form an arc, after the arc is formed, a large quantity of electrons are generated in the air, and conductivity performance is rapidly improved. Even if a distance between the two conductors continues to increase, the arc cannot be extinguished. This phenomenon is arcing.

In view ofn this, embodiments of this application provide an energy storage system and a photovoltaic energy storage device, to effectively and accurately detect an arcing phenomenon in an energy storage system, and improve safety of using the energy storage system.

The following describes an energy storage system by using an example in which a positive output end of a battery cluster is connected to a positive input end of a DC-DC conversion circuit, a negative output end of the battery cluster is connected to a negative input end of the DC-DC conversion circuit, a positive output end of the DC-DC conversion circuit is connected to a positive input end of a DC-AC conversion circuit, and a negative output end of the DC-DC conversion circuit is connected to a negative input end of the DC-AC conversion circuit.

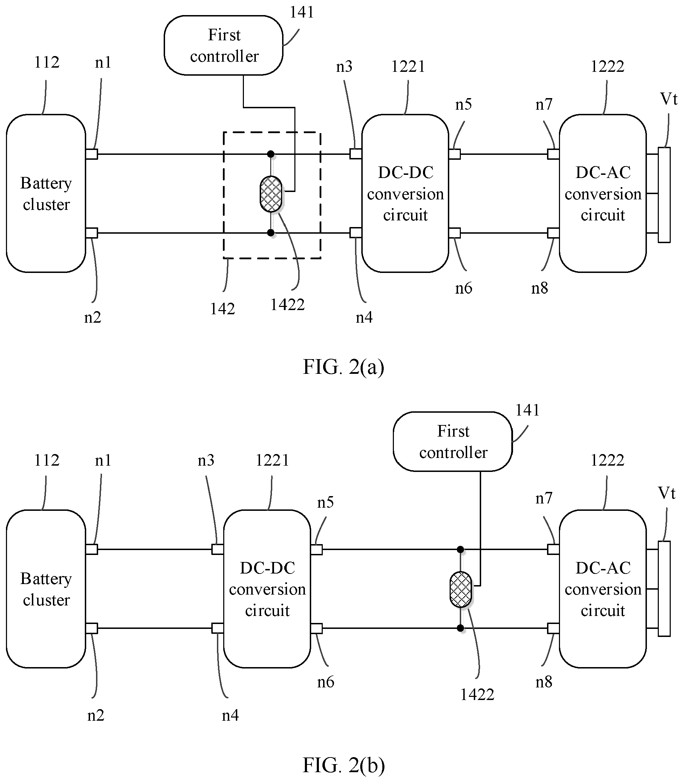

FIG. 2 is an example diagram of a structure of an energy storage system m0 according to this application. As shown in FIG. 2, the energy storage system may include a battery cluster 112, a DC-DC conversion circuit 1221, and a DC-AC conversion circuit 1222. A positive input end n3 of the DC-DC conversion circuit 1221 is connected to a positive output end n1 of the battery cluster 112, and a negative input end n4 of the DC-DC conversion circuit 1221 is connected to a negative output end n2 of the battery cluster 112. A positive output end n5 of the DC-DC conversion circuit 1221 is connected to a positive input end n7 of the DC-AC conversion circuit 1222, and a negative output end n6 of the DC-DC conversion circuit 1221 is connected to a negative input end n8 of the DC-AC conversion circuit 1222.

The energy storage system may further include a first controller 141 and a first detection apparatus 142. The first detection apparatus 142 includes a first common-mode current detection unit 1422. As shown in FIG. 2(a), a first end of the first common-mode current detection unit 1422 is connected to the positive output end n1 of the battery cluster 112, a second end of the first common-mode current detection unit 1422 is connected to the negative output end n2 of the battery cluster 112, and a third end of the first common-mode current detection unit 1422 is connected to the first controller 141. The first common-mode current detection unit 1422 may detect a common-mode current between the positive output end n1 of the battery cluster 112 and the negative output end n2 of the battery cluster 112, and transmit the common-mode current to the first controller 141. Therefore, when an arcing phenomenon occurs between the positive output end n1 of the battery cluster 112 and the negative output end n2 of the battery cluster 112, the arcing phenomenon may be detected as early as possible. Alternatively, as shown in FIG. 2(b), a first end of the first common-mode current detection unit 1422 is connected to the positive output end n5 of the DC-DC conversion circuit 1221, a second end of the first common-mode current detection unit 1422 is connected to the negative output end n6 of the DC-DC conversion circuit 1221, and a third end of the first common-mode current detection unit 1422 is connected to the first controller 141. The first common-mode current detection unit 1422 may detect a common-mode current between the positive output end n5 of the DC-DC conversion circuit 1221 and the negative output end n6 of the DC-DC conversion circuit 1221, and transmit the common-mode current to the first controller 141. Therefore, when an arcing phenomenon occurs between the positive output end n5 of the DC-DC conversion circuit 1221 and the negative output end n6 of the DC-DC conversion circuit 1221, the arcing phenomenon may be detected as early as possible.

In this way, the first controller 141 can analyze the common-mode current. Because a current has a plurality of frequency domain components, each frequency domain component of the common-mode current may be determined. A current generated when arcing occurs has the following features: Different frequency domain components are different from each other; each frequency domain component varies greatly; and some frequency domain components may be large, and some frequency domain components may be small. A current generated when no arcing occurs has the following features: Different frequency domain components are all 0, and there is no large frequency domain component. Therefore, each determined frequency domain component may be analyzed. A frequency domain component being greater than a first preset amplitude indicates that the common-mode current includes a large frequency domain component. In this case, it can be determined that the common-mode current is a current generated when arcing occurs. In other words, it can be determined that an arcing phenomenon currently occurs. This improves accuracy and effectiveness of arcing phenomenon detection, and reduces a detection error. In addition, the first controller 141 may control a path between the battery cluster 112 and an output end Vt of the energy storage system to be cut off, to implement an arc extinguishing action or a protection action. In this way, when an arcing phenomenon occurs, an arc extinguishing measure can be taken in a timely manner, to improve safety of using the energy storage system.

The first preset amplitude may be determined based on a frequency domain component of a corresponding current generated when an arcing phenomenon occurs, to avoid occurrence of and eliminate an arcing phenomenon. A specific value is not limited herein.

In addition, a specific implementation structure of the first common-mode current detection unit 1422 may be any structure that can implement a common-mode current detection function and that is well known to persons skilled in the art, for example, but not limited to, a residual current operated protective device, a current transformer, or a Hall effect sensor. This is not specifically limited herein.

In addition, that the path between the battery cluster 112 and the output end Vt of the energy storage system is controlled to be cut off includes but is not limited to at least one of the following: The first controller 141 controls the DC-DC conversion circuit 1221 not to output a direct current to the outside, and the first controller 141 controls the DC-AC conversion circuit 1222 not to output an alternating current to the outside. Optionally, the DC-DC conversion circuit 1221 may include a plurality of transistors. The first controller 141 controls, to be turned off, a transistor among the plurality of transistors that is configured to output a direct current to the outside, so that the DC-DC conversion circuit 1221 does not output a direct current to the outside. A connection relationship and an arrangement manner of the transistors may be determined according to an actual requirement. This is not limited herein. Similarly, the DC-AC conversion circuit 1222 may also include a plurality of transistors. The first controller 141 controls, to be turned off, a transistor among the plurality of transistors that is configured to output an alternating current to the outside, so that the DC-AC conversion circuit 1222 does not output an alternating current to the outside. A connection relationship, an arrangement manner of the transistors may be determined according to an actual requirement. This is not limited herein.

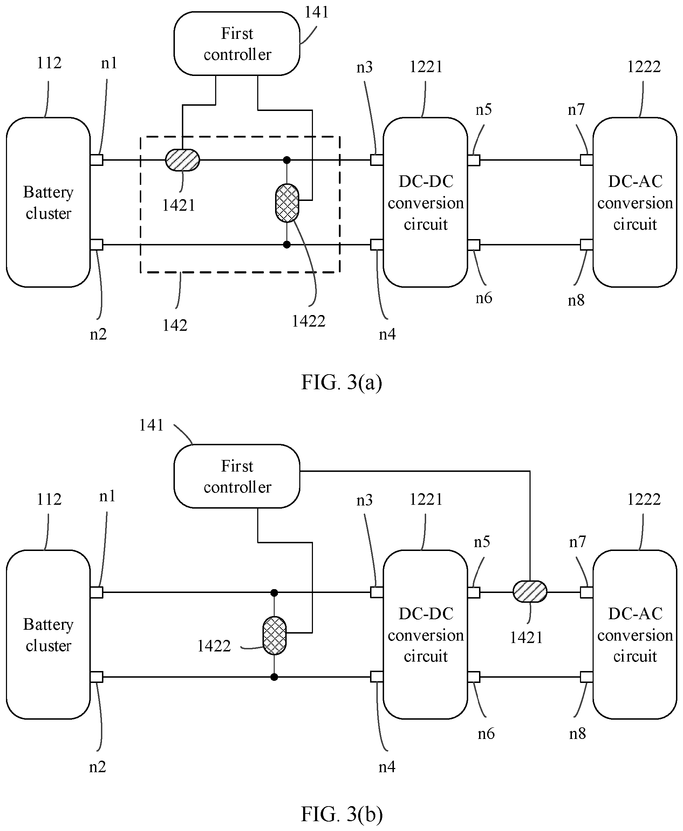

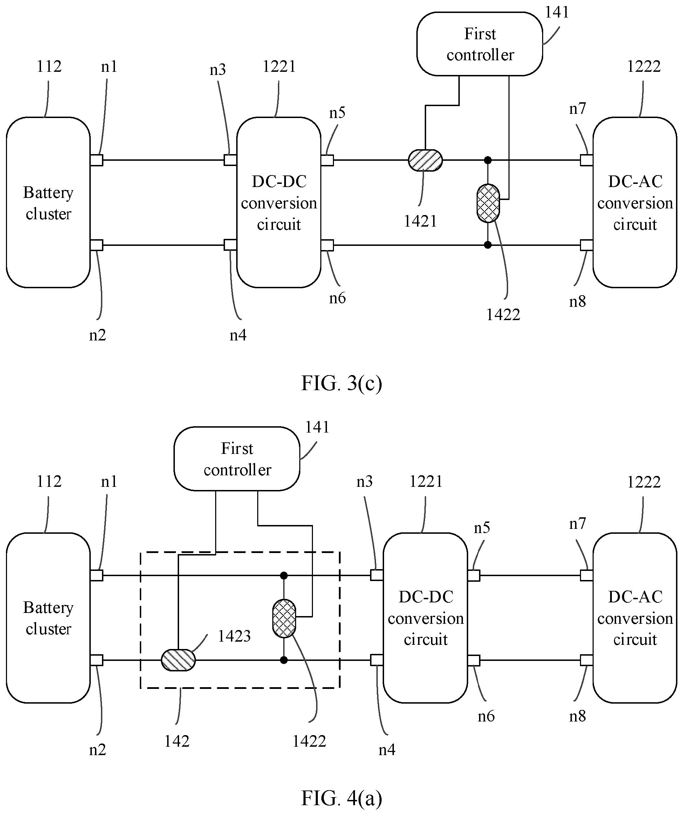

FIG. 3 is an example diagram of a structure of an energy storage system according to this application. As shown in FIG. 3, the structure of the energy storage system in this embodiment is basically similar to the structure of the energy storage system described in the first embodiment shown in FIG. 2. A difference lies in that the first detection apparatus 142 includes a first positive differential-mode current detection unit 1421 and a first common-mode current detection unit 1422. For example, as shown in FIG. 3(a), the first positive differential-mode current detection unit 1421 is connected to the positive output end n1 of the battery cluster 112 and the first controller 141, and the first positive differential-mode current detection unit 1421 may detect a positive differential-mode current at the positive output end n1 of the battery cluster 112, and transmit the positive differential-mode current to the first controller 141. Therefore, when an arcing phenomenon occurs at the positive output end n1 of the battery cluster 112, the arcing phenomenon may be detected as early as possible. Alternatively, as shown in FIG. 3(b) and FIG. 3(c), the first positive differential-mode current detection unit 1421 is connected to the positive output end n5 of the DC-DC conversion circuit 1221 and the first controller 141, and the first positive differential-mode current detection unit 1421 may detect a positive differential-mode current at the positive output end n5 of the DC-DC conversion circuit 1221, and transmit the positive differential-mode current to the first controller 141. Therefore, when an arcing phenomenon occurs at the positive output end n5 of the DC-DC conversion circuit 1221, the arcing phenomenon may be detected as early as possible.

In this way, both the first positive differential-mode current detection unit 1421 and the first common-mode current detection unit 1422 may be disposed between the battery cluster 112 and the DC-DC conversion circuit 1221, as shown in FIG. 3(a). Alternatively, both the first positive differential-mode current detection unit 1421 and the first common-mode current detection unit 1422 may be disposed between the DC-DC conversion circuit 1221 and the DC-AC conversion circuit 1222, as shown in FIG. 3(c). Alternatively, one of the first positive differential-mode current detection unit 1421 and the first common-mode current detection unit 1422 is disposed between the battery cluster 112 and the DC-DC conversion circuit 1221, and the other is disposed between the DC-DC conversion circuit 1221 and the DC-AC conversion circuit 1222, as shown in, for example, but not limited to, FIG. 3(b). Herein, FIG. 3(b) is merely used as an example for illustration. Specific arrangement positions of the first positive differential-mode current detection unit 1421 and the first common-mode current detection unit 1422 may be determined based on an actual case, and are not limited herein.

Therefore, the first controller 141 may determine a frequency domain component of the received positive differential-mode current, and may determine a frequency domain component of a common-mode current. When the frequency domain component of the positive differential-mode current is greater than a second preset amplitude or the frequency domain component of the common-mode current is greater than a first preset amplitude, the first controller 141 may control a path between the battery cluster 112 and an output end of the energy storage system to be cut off, to implement an arc extinguishing action or a protection action. In this way, both the positive differential-mode current and the common-mode current can be detected, to implement detection of a plurality of types of currents. Therefore, whether an arcing phenomenon occurs may be determined from a plurality of perspectives, to improve accuracy and effectiveness of arcing phenomenon detection, and reduce a detection error. When an arcing phenomenon occurs, an arc extinguishing measure may be taken in a timely manner, to improve safety of using the energy storage system.

The second preset amplitude may be determined based on a frequency domain component of a corresponding current generated when an arcing phenomenon occurs, to avoid occurrence of and eliminate an arcing phenomenon. A specific value is not limited herein. In addition, a specific implementation structure of the first positive differential-mode current detection unit 1421 may be any structure that can implement a positive differential-mode current detection function and that is well known to persons skilled in the art, for example, but not limited to, any one of a shunt and a current transformer. This is not specifically limited herein.

It should be understood that, in this embodiment, implementations of structures in the energy storage system other than the first positive differential-mode current detection unit are the same as specific implementations of corresponding structures described in the first embodiment shown in FIG. 2. For details, refer to related descriptions in the first embodiment shown in FIG. 2. Repeated descriptions are omitted.

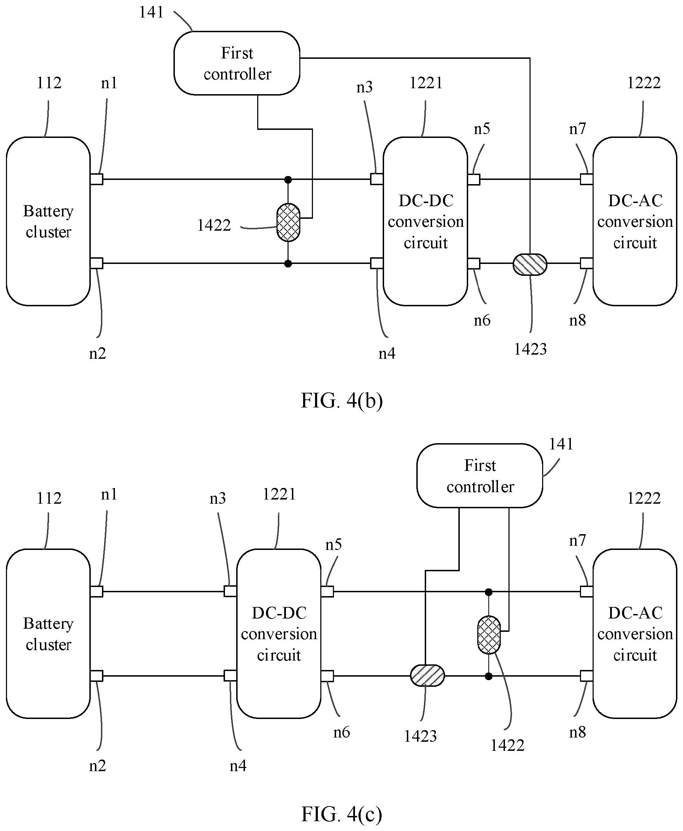

FIG. 4 is an example diagram of a structure of an energy storage system according to this application. As shown in FIG. 4, the structure of the energy storage system in this embodiment is basically similar to the structure of the energy storage system described in the first embodiment shown in FIG. 2. A difference lies in that the first detection apparatus 142 includes a first negative differential-mode current detection unit 1423 and a first common-mode current detection unit 1422. For example, as shown in FIG. 4(a), the first negative differential-mode current detection unit 1423 is connected to the negative output end n2 of the battery cluster 112 and the first controller 141, and the first negative differential-mode current detection unit 1423 may detect a negative differential-mode current at the negative output end n2 of the battery cluster 112, and transmit the negative differential-mode current to the first controller 141. Therefore, when an arcing phenomenon occurs at the negative output end n2 of the battery cluster 112, the arcing phenomenon may be detected as early as possible. Alternatively, as shown in FIG. 4(b) and FIG. 4(c), the first negative differential-mode current detection unit 1423 is connected to the negative output end n6 of the DC-DC conversion circuit 1221 and the first controller 141, and the first negative differential-mode current detection unit 1423 may detect a negative differential-mode current at the negative output end n6 of the DC-DC conversion circuit 1221, and transmit the negative differential-mode current to the first controller 141. Therefore, when an arcing phenomenon occurs at the negative output end n6 of the DC-DC conversion circuit 1221, the arcing phenomenon may be detected as early as possible. In this case, the first controller 141 may determine a frequency domain component of the received negative differential-mode current. When the frequency domain component of the negative differential-mode current is greater than a second preset amplitude or a frequency domain component of a common-mode current is greater than a first preset amplitude, the first controller 141 may control a path between the battery cluster 112 and an output end of the energy storage system to be cut off, to implement an arc extinguishing action or a protection action.

Both the first negative differential-mode current detection unit 1423 and the first common-mode current detection unit 1422 may be disposed between the battery cluster 112 and the DC-DC conversion circuit 1221, as shown in FIG. 4(a). Alternatively, both the first negative differential-mode current detection unit 1423 and the first common-mode current detection unit 1422 may be disposed between the DC-DC conversion circuit 1221 and the DC-AC conversion circuit 1222, as shown in FIG. 4(c). Alternatively, one of the first negative differential-mode current detection unit 1423 and the first common-mode current detection unit 1422 is disposed between the battery cluster 112 and the DC-DC conversion circuit 1221, and the other is disposed between the DC-DC conversion circuit 1221 and the DC-AC conversion circuit 1222, as shown in, for example, but not limited to, FIG. 4(b). Herein, FIG. 4(b) is merely used as an example for illustration. Specific arrangement positions of the first negative differential-mode current detection unit 1423 and the first common-mode current detection unit 1422 may be determined based on an actual case, and are not limited herein.

In addition, a specific implementation structure of the first negative differential-mode current detection unit 1423 may be any structure that can implement a negative differential-mode current detection function and that is well known to persons skilled in the art, for example, but not limited to, any one of a shunt and a current transformer. This is not specifically limited herein.

It should be understood that, in this embodiment, implementations of structures in the energy storage system other than the first negative differential-mode current detection unit are the same as specific implementations of corresponding structures described in the first embodiment shown in FIG. 2. For details, refer to related descriptions in the first embodiment shown in FIG. 2. Repeated descriptions are omitted.

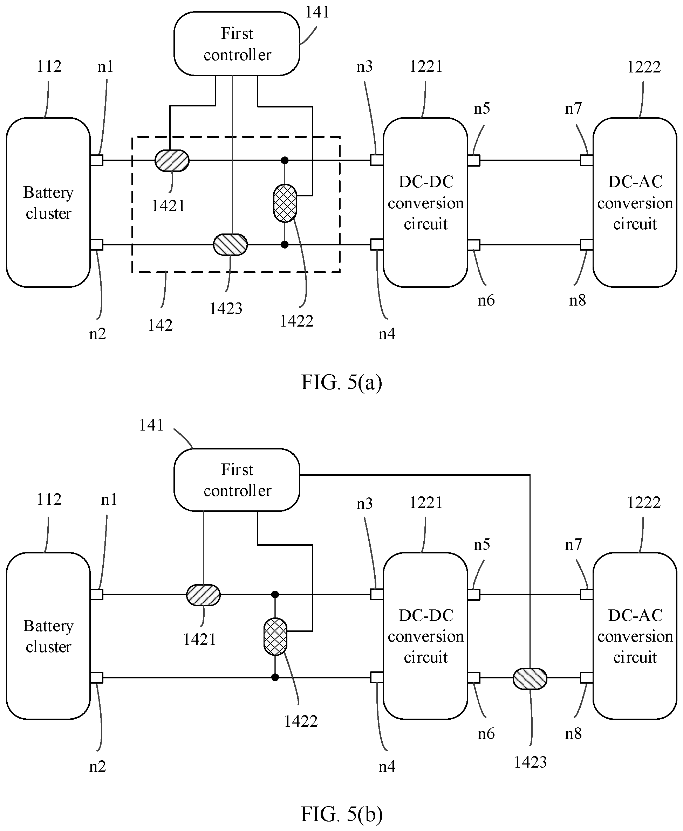

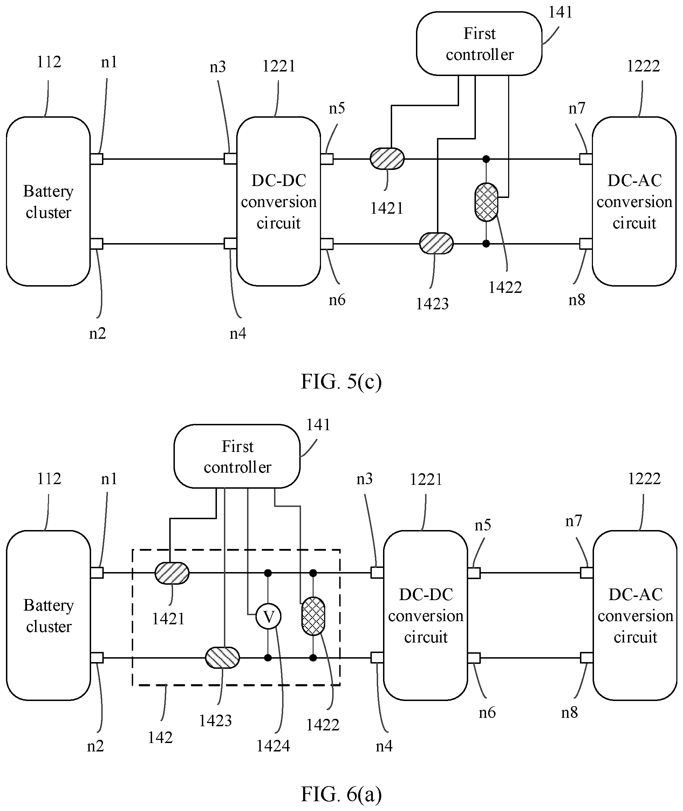

FIG. 5 is an example diagram of a structure of an energy storage system according to this application. As shown in FIG. 5, the structure of the energy storage system in this embodiment is basically similar to the structure of the energy storage system described in the first embodiment shown in FIG. 2. A difference lies in that the first detection apparatus 142 includes a first positive differential-mode current detection unit 1421, a first negative differential-mode current detection unit 1423, and a first common-mode current detection unit 1422. Therefore, the first positive differential-mode current detection unit 1421 may collect a positive differential-mode current in a connected circuit, the first negative differential-mode current detection unit 1423 may collect a negative differential-mode current in a connected circuit, and the first common-mode current detection unit 1422 may further collect a common-mode current in a connected circuit. In this case, when a frequency domain component of the positive differential-mode current is greater than a second preset amplitude, a frequency domain component of the negative differential-mode current is greater than a second preset amplitude, or a frequency domain component of the common-mode current is greater than a first preset amplitude, the first controller 141 may control a path between the battery cluster 112 and an output end of the energy storage system to be cut off, to implement an arc extinguishing action or a protection action. In this way, more current signals can be collected, and determining is performed based on all of the positive differential-mode current, the negative differential-mode current, and the common-mode current, to further improve accuracy and effectiveness of arcing phenomenon detection, further reduce a detection error, and further improve safety of using the energy storage system.

All of the first positive differential-mode current detection unit 1421, the first negative differential-mode current detection unit 1423, and the first common-mode current detection unit 1422 may be disposed between the battery cluster 112 and the DC-DC conversion circuit 1221, as shown in FIG. 5(a). Alternatively, all of the first positive differential-mode current detection unit 1421, the first negative differential-mode current detection unit 1423, and the first common-mode current detection unit 1422 may be disposed between the DC-DC conversion circuit 1221 and the DC-AC conversion circuit 1222, as shown in FIG. 5(c). Alternatively, some of the first positive differential-mode current detection unit 1421, the first negative differential-mode current detection unit 1423, and the first common-mode current detection unit 1422 are disposed between the battery cluster 112 and the DC-DC conversion circuit 1221, and the rest is disposed between the DC-DC conversion circuit 1221 and the DC-AC conversion circuit 1222, as shown in, for example, but not limited to, FIG. 5(b). Herein, FIG. 5(b) is merely used as an example for illustration. Specific arrangement positions of the first positive differential-mode current detection unit 1421, the first negative differential-mode current detection unit 1423, and the first common-mode current detection unit 1422 may be determined based on an actual case, and are not limited herein.

It should be understood that, in this embodiment, a specific implementation of the first common-mode current detection unit 1422 is the same as a specific implementation of a corresponding structure described in the first embodiment shown in FIG. 2. For details, refer to related descriptions in the first embodiment shown in FIG. 2. Repeated descriptions are omitted. A specific implementation of the first positive differential-mode current detection unit 1421 is the same as a specific implementation of a corresponding structure described in the second embodiment shown in FIG. 3. For details, refer to related descriptions in the second embodiment shown in FIG. 3. Repeated descriptions are omitted. A specific implementation of the first negative differential-mode current detection unit 1423 is the same as a specific implementation of a corresponding structure described in the third embodiment shown in FIG. 4. For details, refer to related descriptions in the third embodiment shown in FIG. 4. Repeated descriptions are omitted. In addition, for similarities between the structure of the energy storage system in this embodiment and the structure of the energy storage system described in the first embodiment shown in FIG. 2, refer to related descriptions in the first embodiment shown in FIG. 2. Repeated descriptions are omitted.

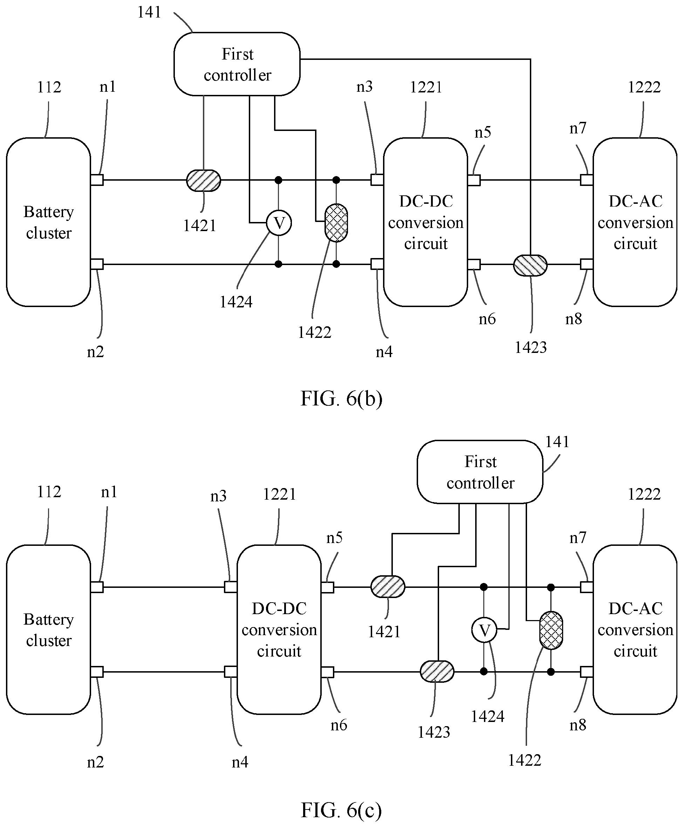

FIG. 6 is an example diagram of a structure of an energy storage system according to this application. As shown in FIG. 6, the structure of the energy storage system in this embodiment is basically similar to the structure of the energy storage system described in any one of the embodiments shown in FIG. 2 to FIG. 5. A difference lies in that, based on the energy storage system described in any one of the embodiments shown in FIG. 2 to FIG. 5, the first detection apparatus 142 further includes a voltage detection unit 1424. For example, as shown in FIG. 6(a) and FIG.6(b), the voltage detection unit 1424 is connected to the first controller 141, the positive output end n1 of the battery cluster 112, and the negative output end n2 of the battery cluster 112, and the voltage detection unit 1424 may collect a voltage between the positive output end n1 of the battery cluster 112 and the negative output end n2 of the battery cluster 112, and transmit the voltage to the first controller 141. Alternatively, as shown in FIG. 6(c), the voltage detection unit 1424 is connected to the first controller 141, the positive output end n5 of the DC-DC conversion circuit 1221, and the negative output end n6 of the DC-DC conversion circuit 1221, and the voltage detection unit 1424 may collect a voltage between the positive output end n5 of the DC-DC conversion circuit 1221 and the negative output end n6 of the DC-DC conversion circuit 1221, and transmit the voltage to the first controller 141. In this case, the first controller 141 may store the received voltage, and report the voltage to a server when receiving a reporting instruction delivered by the server. In this way, the server can monitor and analyze a running status of the energy storage system, to provide a data reference for maintaining or repairing the energy storage system, to improve maintenance and repair efficiency.

When the first detection apparatus 142 includes the first common-mode current detection unit 1422, the voltage detection unit 1424, and at least one of the first positive differential-mode current detection unit 1421 and the first negative differential-mode current detection unit 1423, all of the detection units may be disposed between the battery cluster 112 and the DC-DC conversion circuit 1221 (as shown in FIG. 6(a)). Alternatively, all of the detection units are disposed between the DC-DC conversion circuit 1221 and the DC-AC conversion circuit (as shown in FIG. 6(c)). Alternatively, some of the detection units are disposed between the battery cluster 112 and the DC-DC conversion circuit 1221, and the rest is disposed between the DC-DC conversion circuit 1221 and the DC-AC conversion circuit, as shown in FIG. 6(b), but not limited to FIG. 6(b). Herein, FIG. 6(b) is merely used as an example. In other words, an arrangement manner of the detection units may be determined based on an actual case, and is not limited herein.

In addition, a specific implementation structure of the voltage detection unit 1424 may be any structure that can implement a voltage detection function and that is well known to persons skilled in the art, for example, but not limited to, a voltage divider resistor. This is not specifically limited herein.

It should be understood that, for similarities between the structure of the energy storage system in this embodiment and the structure of the energy storage system described in any one of the embodiments shown in FIG. 2 to FIG. 5, reference may also be made to related descriptions in any one of the embodiments shown in FIG. 2 to FIG. 5. Repeated descriptions are omitted.

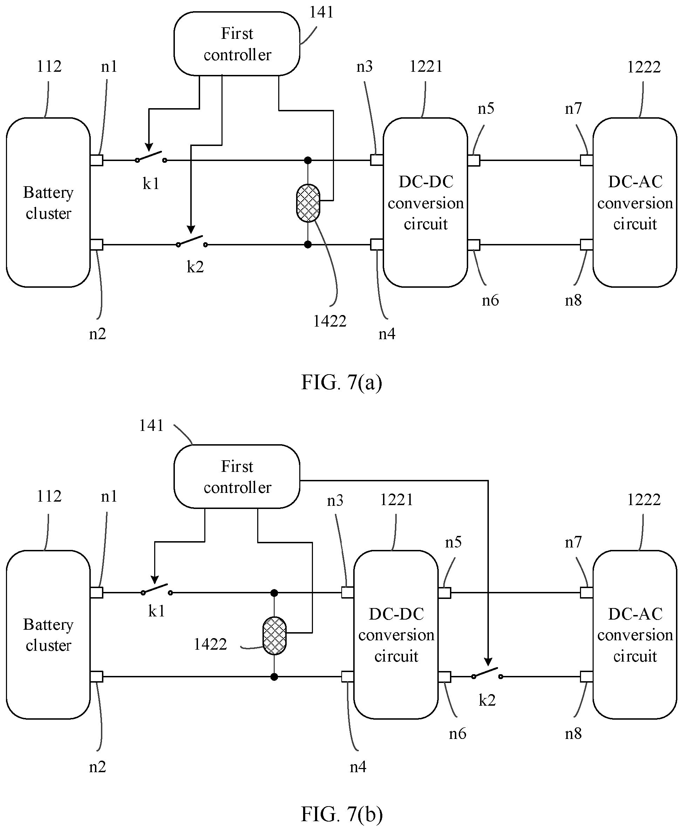

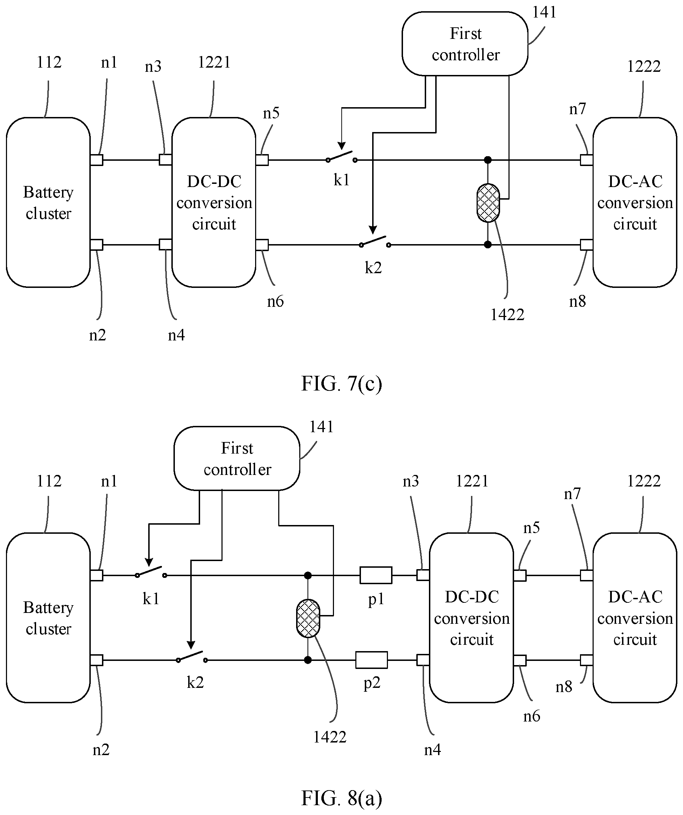

FIG. 7 is an example diagram of a structure of an energy storage system according to this application. As shown in FIG. 7, the structure of the energy storage system in this embodiment is basically similar to the structure of the energy storage system described in any one of the embodiments shown in FIG. 2 to FIG. 6. A difference lies in that, based on the energy storage system described in any one of the embodiments shown in FIG. 2 to FIG. 6, the energy storage system further includes a first switch k1 and a second switch k2.

For the first switch k1: One end of the first switch k1 is connected to the positive output end n1 of the battery cluster 112, and the other end of the first switch k1 is connected to the positive input end n3 of the DC-DC conversion circuit 1221, as shown in FIG. 7(a) and FIG. 7(b). When the first switch k1 is turned off, a conductive path between the positive output end n1 of the battery cluster 112 and the positive input end n3 of the DC-DC conversion circuit 1221 may be cut off. When the first switch k1 is turned on, the positive output end n1 of the battery cluster 112 may be connected to the positive input end n3 of the DC-DC conversion circuit 1221. Therefore, connection or disconnection between the positive output end n1 of the battery cluster 112 and the positive input end n3 of the DC-DC conversion circuit 1221 may be controlled by turning on or turning off the first switch k1. In this way, when an arcing phenomenon occurs, the positive output end n1 of the battery cluster 112 can be disconnected from the positive input end n3 of the DC-DC conversion circuit 1221 in a timely manner, to cut off the conductive path at the positive output end n1 of the battery cluster 112. Alternatively, one end of the first switch k1 is connected to the positive output end n5 of the DC-DC conversion circuit 1221, and the other end of the first switch k1 is connected to the positive input end n7 of the DC-AC conversion circuit 1222, as shown in FIG. 7(c). When the first switch k1 is turned off, a conductive path between the positive output end n5 of the DC-DC conversion circuit 1221 and the positive input end n7 of the DC-AC conversion circuit 1222 may be cut off. When the first switch k1 is turned on, the positive output end n5 of the DC-DC conversion circuit 1221 may be connected to the positive input end n7 of the DC-AC conversion circuit 1222. Therefore, connection or disconnection between the positive output end n5 of the DC-DC conversion circuit 1221 and the positive input end n7 of the DC-AC conversion circuit 1222 may be controlled by turning on or turning off the first switch k1. In this way, when an arcing phenomenon occurs, the positive output end n5 of the DC-DC conversion circuit 1221 can be disconnected from the positive input end n7 of the DC-AC conversion circuit 1222 in a timely manner. The first switch k1 may be at least one of a relay and a contactor. For example, the first switch k1 is a relay, or the first switch k1 is a contactor, or the first switch k1 is a relay and a contactor.

For the second switch k2: One end of the second switch k2 is connected to the negative output end n2 of the battery cluster 112, and the other end of the second switch k2 is connected to the negative input end n4 of the DC-DC conversion circuit 1221, as shown in FIG. 7(a). When the second switch k2 is turned off, a conductive path between the negative output end n2 of the battery cluster 112 and the negative input end n4 of the DC-DC conversion circuit 1221 may be cut off. When the second switch k2 is turned on, the negative output end n2 of the battery cluster 112 may be connected to the negative input end n4 of the DC-DC conversion circuit 1221. Therefore, connection or disconnection between the negative output end n2 of the battery cluster 112 and the negative input end n4 of the DC-DC conversion circuit 1221 may be controlled by turning on or turning off the second switch k2. In this way, when an arcing phenomenon occurs, the negative output end n2 of the battery cluster 112 can be disconnected from the negative input end n4 of the DC-DC conversion circuit 1221 in a timely manner. Alternatively, one end of the second switch k2 is connected to the negative output end n6 of the DC-DC conversion circuit 1221, and the other end of the second switch k2 is connected to the negative input end n8 of the DC-AC conversion circuit 1222, as shown in FIG. 7(b) and FIG.7(c). When the second switch k2 is turned off, a conductive path between the negative output end n6 of the DC-DC conversion circuit 1221 and the negative input end n8 of the DC-AC conversion circuit 1222 may be cut off. When the second switch k2 is turned on, the negative output end n6 of the DC-DC conversion circuit 1221 may be connected to the negative input end n8 of the DC-AC conversion circuit 1222. Therefore, connection or disconnection between the negative output end n6 of the DC-DC conversion circuit 1221 and the negative input end n8 of the DC-AC conversion circuit 1222 may be controlled by turning on or turning off the second switch k2. In this way, when an arcing phenomenon occurs, the negative output end n6 of the DC-DC conversion circuit 1221 can be disconnected from the negative input end n8 of the DC-AC conversion circuit 1222 in a timely manner. The second switch k2 may also be at least one of a relay and a contactor. For example, the second switch k2 is a relay, or the second switch k2 is a contactor, or the second switch k2 is a relay and a contactor.

In this way, when determining that a path between the battery cluster 112 and an output end of the energy storage system needs to be cut off, the first controller 141 controls the first switch k1 and the second switch k2 to be turned off, to cut off a path controlled by the first switch k1 and cut off a path controlled by the second switch k2, to effectively cut off the path between the battery cluster 112 and the output end of the energy storage system. This disconnects the battery cluster 112 from a power supply path, suppresses continuous arcing, and further improves safety of using the energy storage system.

For the first switch k1 and the second switch k2, both of the two switches may be disposed between the battery cluster 112 and the DC-DC conversion circuit 1221; or both of the two switches are disposed between the DC-DC conversion circuit 1221 and the DC-AC conversion circuit 1222; or one of the two switches is disposed between the battery cluster 112 and the DC-DC conversion circuit 1221, and the other is disposed between the DC-DC conversion circuit 1221 and the DC-AC conversion circuit 1222. FIG. 7(a) to FIG. 7(c) show only some of arrangement manners.

However, this does not indicate that an arrangement manner of the first switch k1 and the second switch k2 is merely shown in FIG. 7(a) to FIG. 7(c). Herein, FIG. 7(a) to FIG. 7(c) are merely used as examples for illustration. The arrangement manner of the first switch k1 and the second switch k2 may be determined based on an actual case, and is not limited herein.

It should be understood that, for similarities between the structure of the energy storage system in this embodiment and the structure of the energy storage system described in any one of the embodiments shown in FIG. 2 to FIG. 6, reference may also be made to related descriptions in any one of the embodiments shown in FIG. 2 to FIG. 6. Repeated descriptions are omitted.

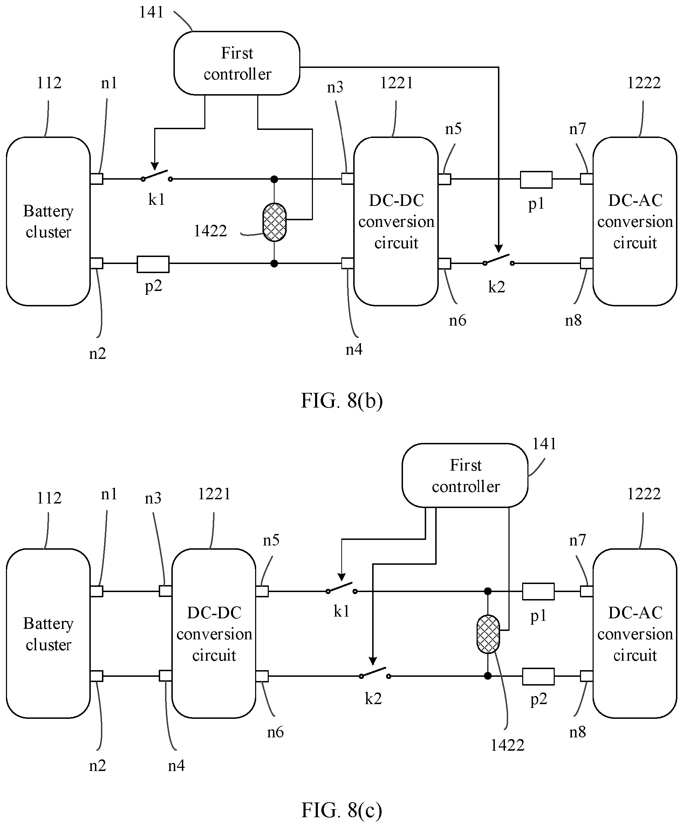

FIG. 8 is an example diagram of a structure of an energy storage system according to this application. As shown in FIG. 8, the structure of the energy storage system in this embodiment is basically similar to the structure of the energy storage system described in any one of the embodiments shown in FIG. 2 to FIG. 7. A difference lies in that, based on the energy storage system described in any one of the embodiments shown in FIG. 2 to FIG. 7, the energy storage system further includes a first protective device p1 and a second protective device p2.

For the first protective device p1: One end of the first protective device p1 is connected to the positive output end n1 of the battery cluster 112, and the other end of the first protective device p1 is connected to the positive input end n3 of the DC-DC conversion circuit 1221, as shown in FIG. 8(a). When the first protective device p1 is turned off, a conductive path between the positive output end n1 of the battery cluster 112 and the positive input end n3 of the DC-DC conversion circuit 1221 may be cut off. When the first protective device p1 is turned on, the positive output end n1 of the battery cluster 112 may be connected to the positive input end n3 of the DC-DC conversion circuit 1221. Therefore, connection or disconnection between the positive output end n1 of the battery cluster 112 and the positive input end n3 of the DC-DC conversion circuit 1221 may be controlled by turning on or turning off the first protective device p1. Alternatively, one end of the first protective device p1 is connected to the positive output end n5 of the DC-DC conversion circuit 1221, and the other end of the first protective device p1 is connected to the positive input end n7 of the DC-AC conversion circuit 1222, as shown in FIG. 8(b) and FIG. 8(c). When the first protective device p1 is turned off, a conductive path between the positive output end n5 of the DC-DC conversion circuit 1221 and the positive input end n7 of the DC-AC conversion circuit 1222 may be cut off. When the first protective device p1 is turned on, the positive output end n5 of the DC-DC conversion circuit 1221 may be connected to the positive input end n7 of the DC-AC conversion circuit 1222. Therefore, connection or disconnection between the positive output end n5 of the DC-DC conversion circuit 1221 and the positive input end n7 of the DC-AC conversion circuit 1222 may be controlled by turning on or turning off the first protective device p1. Based on this, when a current in a line connected to the first protective device exceeds a first preset current, the first protective device is turned off; otherwise, the first protective device remains on. The first protective device p1 may be at least one of a fuse and a circuit breaker. For example, the first protective device p1 is a fuse, or the first protective device p1 is a circuit breaker, or the first protective device p1 is a fuse and a circuit breaker.

For the second protective device p2: One end of the second protective device p2 is connected to the negative output end n2 of the battery cluster 112, and the other end of the second protective device p2 is connected to the negative input end n4 of the DC-DC conversion circuit 1221, as shown in FIG. 8(a) and FIG. 8(b). When the second protective device p2 is turned off, a conductive path between the negative output end n2 of the battery cluster 112 and the negative input end n4 of the DC-DC conversion circuit 1221 may be cut off. When the second protective device p2 is turned on, the negative output end n2 of the battery cluster 112 may be connected to the negative input end n4 of the DC-DC conversion circuit 1221. Therefore, connection or disconnection between the negative output end n2 of the battery cluster 112 and the negative input end n4 of the DC-DC conversion circuit 1221 may be controlled by turning on or turning off the second protective device p2. Alternatively, one end of the second protective device p2 is connected to the negative output end n6 of the DC-DC conversion circuit 1221, and the other end of the second protective device p2 is connected to the negative input end n8 of the DC-AC conversion circuit 1222, as shown in FIG. 8(c). When the second protective device p2 is turned off, a conductive path between the negative output end n6 of the DC-DC conversion circuit 1221 and the negative input end n8 of the DC-AC conversion circuit 1222 may be cut off. When the second protective device p2 is turned on, the negative output end n6 of the DC-DC conversion circuit 1221 may be connected to the negative input end n8 of the DC-AC conversion circuit 1222. Therefore, connection or disconnection between the negative output end n6 of the DC-DC conversion circuit 1221 and the negative input end n8 of the DC-AC conversion circuit 1222 may be controlled by turning on or turning off the second protective device p2. Based on this, when a current in a line connected to the second protective device exceeds a second preset current, the second protective device is turned off; otherwise, the second protective device remains on. The second protective device p2 may also be at least one of a fuse and a circuit breaker. For example, the second protective device p2 is a fuse, or the second protective device p2 is a circuit breaker, or the second protective device p2 is a fuse and a circuit breaker.

In this way, a path controlled by the first protective device p1 and a path controlled by the second protective device p2 can be cut off by the first protective device p1 and the second protective device p2 respectively, to avoid damage to the battery cluster 112, the DC-DC conversion circuit 1221, and the DC-AC conversion circuit 1222 when a current is excessively large, and improve reliability of the energy storage system. It should be understood that the first preset current and the second preset current may be set based on a maximum current that the battery cluster 112, the DC-DC conversion circuit 1221, and the DC-AC conversion circuit 1222 can withstand, to avoid damage to the battery cluster 112, the DC-DC conversion circuit 1221, and the DC-AC conversion circuit 1222. Specific values are not limited herein.

Further, if the energy storage system is provided with all of the first switch k1, the second switch k2, the first protective device p1, and the second protective device p2, the first switch k1 and the first protective device p1 may be connected in series between the positive output end n1 of the battery cluster 112 and the positive input end n3 of the DC-DC conversion circuit 1221 (as shown in FIG. 8(a)), or connected in series between the positive output end n5 of the DC-DC conversion circuit 1221 and the positive input end n7 of the DC-AC conversion circuit 1222 (as shown in FIG. 8(c)). Similarly, the second switch k2 and the second protective device p2 may be connected in series between the negative output end n2 of the battery cluster 112 and the negative input end n4 of the DC-DC conversion circuit 1221 (as shown in FIG. 8(a)), or connected in series between the negative output end n6 of the DC-DC conversion circuit 1221 and the negative input end n8 of the DC-AC conversion circuit 1222 (as shown in FIG. 8(c)). In addition, a common-mode current corresponding to a case in which a frequency domain component is greater than a first preset amplitude is usually less than the first preset current and the second preset current. Therefore, when a path between the battery cluster 112 and an output end of the energy storage system needs to be controlled to be cut off, a current at the positive output end n1 of the battery cluster 112 or the positive output end n5 of the DC-DC conversion circuit 1221 may have not reached the first preset current, and a current at the negative output end n2 of the battery cluster 112 or the negative output end n6 of the DC-DC conversion circuit 1221 may have not reached the second preset current. Therefore, before the path between the battery cluster 112 and the output end of the energy storage system is controlled to be cut off, the first protective device p1 and the second protective device p2 quite possibly have not cut off lines in which the first protective device p1 and the second protective device p2 are located. Therefore, the first controller 141 may cut off a power supply path by controlling the first switch k1 and the second switch k2, to disconnect the battery cluster 112 from the power supply path, and suppress continuous arcing.

It should be understood that, for similarities between the structure of the energy storage system in this embodiment and the structure of the energy storage system described in any one of the embodiments shown in FIG. 2 to FIG. 7, reference may also be made to related descriptions in any one of the embodiments shown in FIG. 2 to FIG. 7. Repeated descriptions are omitted. In addition, to simplify the structures of the accompanying drawings, the output end Vt of the energy storage system is not shown in FIG. 3 to FIG. 8.

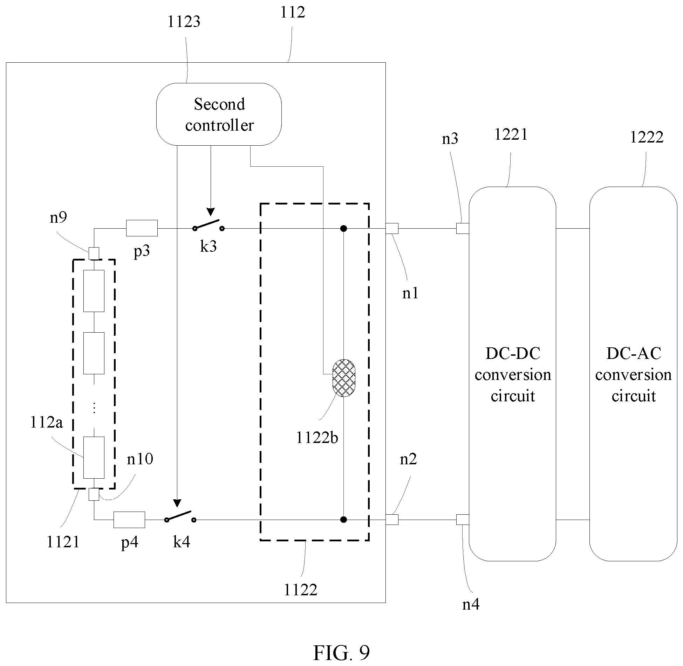

FIG. 9 is an example diagram of a structure of an energy storage system according to this application. As shown in FIG. 9, the energy storage system includes a battery cluster 112, a DC-DC conversion circuit 1221, and a DC-AC conversion circuit 1222. The battery cluster 112 includes one or more battery modules 112a, and the battery modules 112a are connected in series. The battery modules 112a may be considered as a whole and referred to as a module combination 1121. A positive output end n9 of the module combination 1121 is connected to a positive output end n1 of the battery cluster 112, and a negative output end n10 of the module combination 1121 is connected to a negative output end n2 of the battery cluster 112.

The battery cluster 112 further includes a second detection apparatus 1122 and a second controller 1123. The second detection apparatus 1122 includes a second common-mode current detection unit 1122b.

A first end of the second common-mode current detection unit 1122b is connected to the positive output end n9 of the module combination 1121, a second end of the second common-mode current detection unit 1122b is connected to the negative output end n10 of the module combination 1121, and a third end of the second common-mode current detection unit 1122b is connected to the second controller 1123. The second common-mode current detection unit 1122b may detect a common-mode current between the positive output end n9 of the module combination 1121 and the negative output end n10 of the module combination 1121, and transmit the common-mode current to the second controller 1123.

In this way, the second controller 1123 can determine a frequency domain component of the common-mode current, and when the frequency domain component of the common-mode current is greater than a first preset amplitude, the second controller 1123 can control the module combination 1121 not to output electric energy to the outside, to implement an arc extinguishing action or a protection action. This can improve accuracy and effectiveness of arcing phenomenon detection, and reduce a detection error. When an arcing phenomenon occurs, an arc extinguishing measure may be taken in a timely manner, to improve safety of using the battery cluster 112.

A specific implementation structure of the second common-mode current detection unit 1122b may be any structure that can implement a common-mode current detection function and that is well known to persons skilled in the art, for example, but not limited to, a residual current operated protective device, a current transformer, or a Hall effect sensor. This is not specifically limited herein.

In addition, the battery cluster 112 further includes a third switch (corresponding to the first switch disposed in the battery cluster 112 in the foregoing content) k3 and a fourth switch (corresponding to the second switch disposed in the battery cluster 112 in the foregoing content) k4. One end of the third switch k3 is connected to the positive output end n9 of the module combination 1121, and the other end of the third switch k3 is connected to the positive output end n1 of the battery cluster 112. When the third switch k3 is turned off, a conductive path between the positive output end n9 of the module combination 1121 and the positive output end n1 of the battery cluster 112 may be cut off. When the third switch k3 is turned on, the positive output end n9 of the module combination 1121 may be connected to the positive output end n1 of the battery cluster 112. The third switch k3 may be at least one of a relay and a contactor. For example, the third switch k3 is a relay, or the third switch k3 is a contactor, or the third switch k3 is a relay and a contactor.

One end of the fourth switch k4 is connected to the negative output end n10 of the module combination 1121, and the other end of the fourth switch k4 is connected to the negative output end n2 of the battery cluster 112. When the fourth switch k4 is turned off, a conductive path between the negative output end n10 of the module combination 1121 and the negative output end n2 of the battery cluster 112 may be cut off. When the fourth switch k4 is turned on, the negative output end n10 of the module combination 1121 may be connected to the negative output end n2 of the battery cluster 112. The fourth switch k4 may be at least one of a relay and a contactor. For example, the fourth switch k4 is a relay, or the fourth switch k4 is a contactor, or the fourth switch k4 is a relay and a contactor.

In this way, when determining that the battery cluster 112 needs to be controlled not to output electric energy to the outside, the second controller 1123 controls the third switch k3 and the fourth switch k4 to be turned off, to cut off a path controlled by the third switch k3 and cut off a path controlled by the fourth switch k4, to effectively cut off a path through which the battery cluster 112 supplies power to the outside. This disconnects the module combination 1121 from the power supply path, suppresses continuous arcing, and further improves safety of using the energy storage system.

Certainly, the battery cluster 112 may be provided with or without a protective device. When a protective device is provided, the battery cluster 112 may be further provided with a third protective device p3 and a fourth protective device p4. One end of the third protective device p3 is connected to the positive output end n9 of the module combination 1121, and the other end of the third protective device p3 is connected to the positive output end n1 of the battery cluster 112. When the third protective device p3 is turned off, a conductive path between the positive output end n9 of the module combination 1121 and the positive output end n1 of the battery cluster 112 may be cut off. When the third protective device p3 is turned on, the positive output end n9 of the module combination 1121 may be connected to the positive output end n1 of the battery cluster 112. One end of the fourth protective device p4 is connected to the negative output end n10 of the module combination 1121, and the other end of the fourth protective device p4 is connected to the negative output end n2 of the battery cluster 112. When the fourth protective device p4 is turned off, a conductive path between the negative output end n10 of the module combination 1121 and the negative output end n2 of the battery cluster 112 may be cut off. When the fourth protective device p4 is turned on, the negative output end n10 of the module combination 1121 may be connected to the negative output end n2 of the battery cluster 112.

In this way, when a current in a line connected to the third protective device p3 exceeds a third preset current, the third protective device p3 is turned off; otherwise, the third protective device p3 remains on; and when a current in a line connected to the fourth protective device p4 exceeds a fourth preset current, the fourth protective device p4 is turned off; otherwise, the fourth protective device p4 remains on. A path controlled by the third protective device p3 and a path controlled by the fourth protective device p4 may be cut off by the third protective device p3 and the fourth protective device p4 respectively, to avoid damage to the module combination 1121 and the battery cluster 112 when a current is excessively large, and improve reliability of the energy storage system. It should be understood that the third preset current and the fourth preset current may be set based on a maximum current that the module combination 1121 and the battery cluster 112 can withstand, to avoid damage to the battery cluster 112. Specific values are not limited herein.

Further, when the battery cluster is provided with the third switch k3, the fourth switch k4, the third protective device p3, and the fourth protective device p4, the third switch k3 and the third protective device p3 may be connected in series between the positive output end n9 of the module combination 1121 and the positive output end n1 of the battery cluster 112, and the fourth switch k4 and the fourth protective device p4 may be connected in series between the negative output end n10 of the module combination 1121 and the negative output end n2 of the battery cluster 112.

It should be understood that a current detection principle of the second common-mode current detection unit 1122b in this embodiment is similar to the current detection principle of the first common-mode current detection unit described in the first embodiment shown in FIG. 2, a manner of setting the first preset amplitude in this embodiment is similar to the manner of setting the first preset amplitude described in the first embodiment shown in FIG. 2, and a connection relationship between the battery cluster 112, the DC-DC conversion circuit 1221, and the DC-AC conversion circuit 1222 in this embodiment is similar to the connection relationship between the battery cluster 112, the DC-DC conversion circuit, and the DC-AC conversion circuit described in the first embodiment shown in FIG. 2. Therefore, for all of the content, refer to related descriptions in the first embodiment shown in FIG. 2. Repeated descriptions are omitted.

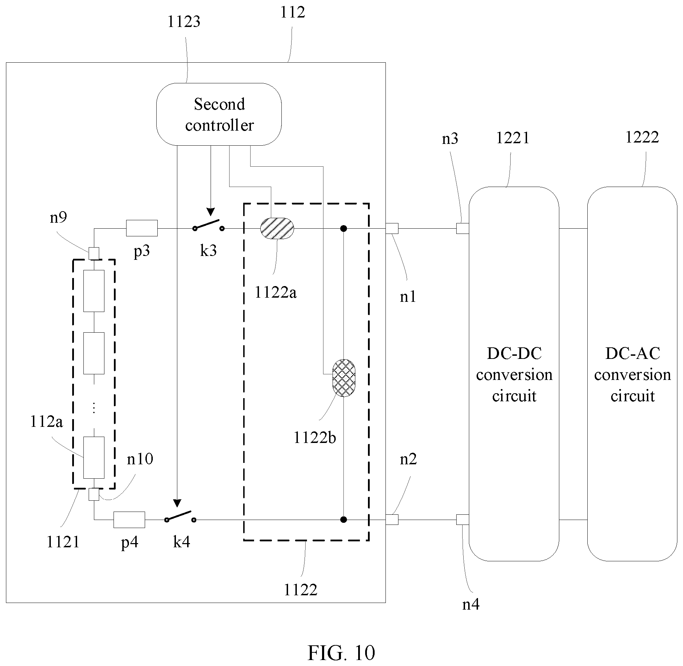

FIG. 10 is an example diagram of a structure of an energy storage system according to this application. As shown in FIG. 10, the structure of the energy storage system in this embodiment is basically similar to the structure of the energy storage system described in the eighth embodiment shown in FIG. 9. A difference lies in that the second detection apparatus 1122 includes a second positive differential-mode current detection unit 1122a and a second common-mode current detection unit 1122b. For example, the second positive differential-mode current detection unit 1122a is connected to the positive output end n9 of the module combination 1121 and the second controller 1123, and the second positive differential-mode current detection unit 1122a may detect a positive differential-mode current at the positive output end n9 of the module combination 1121, and transmit the positive differential-mode current to the second controller 1123.

Therefore, the second controller 1123 may determine a frequency domain component of the received positive differential-mode current, and may further determine a frequency domain component of a common-mode current. When the frequency domain component of the positive differential-mode current is greater than a second preset amplitude or the frequency domain component of the common-mode current is greater than a first preset amplitude, the second controller 1123 may control the module combination 1121 not to output electric energy to the outside, to implement an arc extinguishing action or a protection action. In this way, both the positive differential-mode current and the common-mode current can be detected, to implement detection of a plurality of types of currents. Therefore, whether an arcing phenomenon occurs may be determined from a plurality of perspectives, to improve accuracy and effectiveness of arcing phenomenon detection, and reduce a detection error. When an arcing phenomenon occurs, an arc extinguishing measure may be taken in a timely manner, to improve safety of using the battery cluster 112.

A specific implementation structure of the second positive differential-mode current detection unit 1122a may be any structure that can implement a positive differential-mode current detection function and that is well known to persons skilled in the art, for example, but not limited to, any one of a shunt and a current transformer. This is not specifically limited herein.

It should be understood that, in this embodiment, implementations of structures in the energy storage system other than the second common-mode current detection unit 1122c are the same as specific implementations of corresponding structures described in the eighth embodiment shown in FIG. 9. For details, refer to related descriptions in the eighth embodiment shown in FIG. 9. Repeated descriptions are omitted.

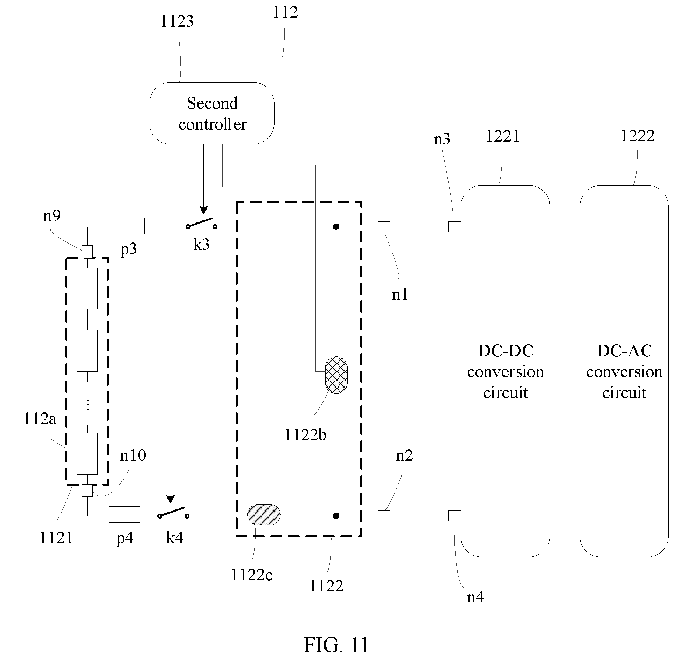

FIG. 11 is an example diagram of a structure of an energy storage system according to this application. As shown in FIG. 11, the structure of the energy storage system in this embodiment is basically similar to the structure of the energy storage system described in the eighth embodiment shown in FIG. 9. A difference lies in that the second detection apparatus 1122 includes a second negative differential-mode current detection unit 1122c and a second common-mode current detection unit 1122b. For example, the second negative differential-mode current detection unit 1122c is connected to the negative output end n10 of the module combination 1121 and the second controller 1123, and the second negative differential-mode current detection unit 1122c may detect a negative differential-mode current at the negative output end n10 of the module combination 1121, and transmit the negative differential-mode current to the second controller 1123. Therefore, the second controller 1123 may determine a frequency domain component of the received negative differential-mode current, and may further determine a frequency domain component of a common-mode current. When the frequency domain component of the negative differential-mode current is greater than a second preset amplitude or the frequency domain component of the common-mode current is greater than a first preset amplitude, the second controller 1123 may control the module combination 1121 not to output electric energy to the outside, to implement an arc extinguishing action or a protection action. In addition, both the negative differential-mode current and the common-mode current can be detected, to implement detection of a plurality of types of currents. Therefore, whether an arcing phenomenon occurs may be determined from a plurality of perspectives, to improve accuracy and effectiveness of arcing phenomenon detection, and reduce a detection error. When an arcing phenomenon occurs, an arc extinguishing measure may be taken in a timely manner, to improve safety of using the battery cluster.

It should be understood that, in this embodiment, implementations of structures in the energy storage system other than the second negative differential-mode current detection unit 1122c are the same as specific implementations of corresponding structures described in the eighth embodiment shown in FIG. 9. For details, refer to related descriptions in the eighth embodiment shown in FIG. 9. Repeated descriptions are omitted.

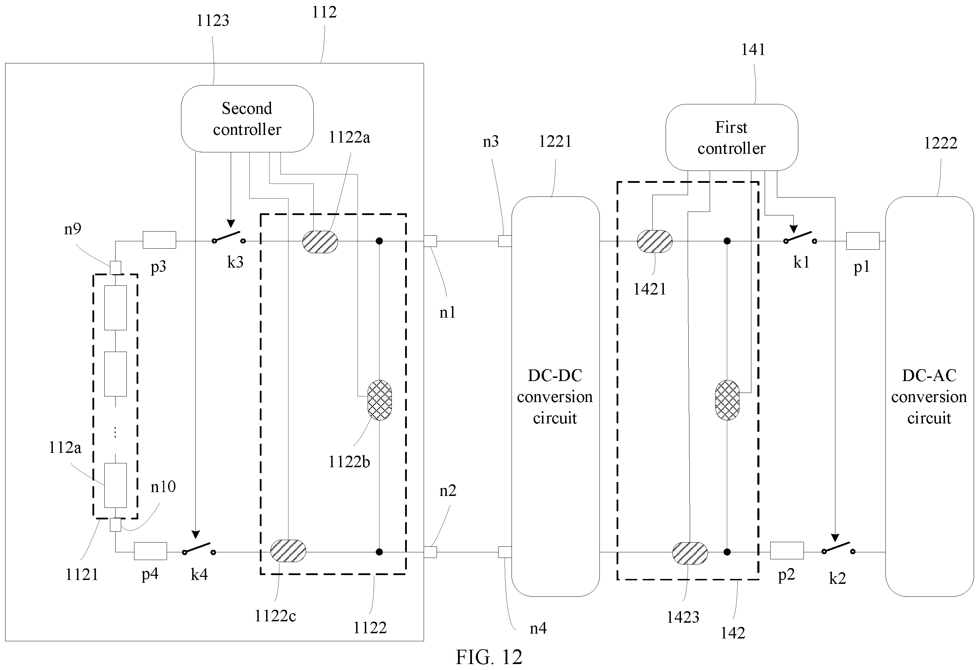

FIG. 12 is an example diagram of a structure of an energy storage system according to this application. As shown in FIG. 12, the structure of the energy storage system in this embodiment is basically similar to the structure of the energy storage system described in the eighth embodiment shown in FIG. 9. A difference lies in that the second detection apparatus 1122 includes a second positive differential-mode current detection unit 1122a, a second negative differential-mode current detection unit 1122c, and a second common-mode current detection unit 1122b. In this case, the second controller 1123 may determine a frequency domain component of a received positive differential-mode current, and determine a frequency domain component of a received negative differential-mode current, and may further determine a frequency domain component of a common-mode current, in addition, when the frequency domain component of the positive differential-mode current is greater than a second preset amplitude, the frequency domain component of the negative differential-mode current is greater than a second preset amplitude, or the frequency domain component of the common-mode current is greater than a first preset amplitude, the second controller 1123 may control the module combination 1121 not to output electric energy to the outside, to implement an arc extinguishing action or a protection action. In this way, all of the positive differential-mode current, the negative differential-mode current, and the common-mode current can be detected, to implement detection of a plurality of types of currents. Therefore, whether an arcing phenomenon occurs may be determined from a plurality of perspectives, to improve accuracy and effectiveness of arcing phenomenon detection, and reduce a detection error. When an arcing phenomenon occurs, an arc extinguishing measure may be taken in a timely manner, to improve safety of using the battery cluster.

That is, this embodiment may be considered as a combination of the energy storage system described in the ninth embodiment shown in FIG. 10 and the energy storage system described in the tenth embodiment shown in FIG. 11. For an implementation of the second common-mode current detection unit 1122b, refer to related descriptions in the eighth embodiment shown in FIG. 9. For an implementation of the second positive differential-mode current detection unit 1122a, refer to related descriptions in the ninth embodiment shown in FIG. 10. For an implementation of the second negative differential-mode current detection unit 1122c, refer to related descriptions in the tenth embodiment shown in FIG. 11. Repeated descriptions are omitted.

It should be understood that, for a same part between the energy storage system in this embodiment and a specific implementation of a corresponding structure described in the eighth embodiment shown in FIG. 9, reference may be made to related descriptions in the eighth embodiment shown in FIG. 9. Repeated descriptions are omitted.

It should be understood that the energy storage system described in any one of the embodiments shown in FIG. 2 to FIG. 8 may be combined with the energy storage system described in any one of the embodiments shown in FIG. 9 to FIG. 12. To be specific, when the first detection apparatus 142 is disposed outside the battery cluster 112, the second detection apparatus 1122 may be disposed inside the battery cluster 112, and both the first detection apparatus 142 and the second detection apparatus 1122 exist. In this way, whether an arcing phenomenon occurs can be determined from a plurality of perspectives, to more effectively detect arcing. In addition, the first switch k1 and the second switch k2 are disposed outside the battery cluster 112, and the third switch k3 and the fourth switch k4 are disposed inside the battery cluster 112. In this way, the battery cluster 112 can be more effectively disconnected from a power supply path, to further improve safety of using the battery cluster 112. Further, the first controller 141 and the second controller 1123 may be a same controller. In this way, a quantity of disposed controllers can be reduced, to reduce manufacturing costs of the energy storage system. Alternatively, the first controller 141 and the second controller 1123 may be two different controllers. In this way, the first detection apparatus 142 and the second detection apparatus 1122 can be separately controlled. Therefore, if one controller is abnormal, when an arcing phenomenon occurs, the battery cluster 112 can still be controlled, by the other controller, not to output electric energy to the outside, to effectively suppress arcing.

Clearly, persons skilled in the art can make various modifications and variations to embodiments of this application without departing from the spirit and scope of embodiments of this application. In this case, this application is intended to cover these modifications and variations of embodiments of this application provided that they fall within the scope of the claims of this application and their equivalent technologies.

## Claims

1. An energy storage system, comprising a battery cluster, a common-mode current detection unit, and a controller, wherein
the battery cluster comprises at least two battery modules, and the at least two battery modules are connected in series;
one end of the common-mode current detection unit is connected to a positive output end of the battery cluster, the other end of the common-mode current detection unit is connected to a negative output end of the battery cluster, and the common-mode current detection unit is configured to detect a common-mode current in a connected circuit; and
the controller is configured to: when a frequency domain component of the common-mode current is greater than a first preset amplitude, control a path between the output end of the battery cluster and an output end of the energy storage system to be cut off.

2. The energy storage system according to claim 1, wherein the energy storage system further comprises a differential-mode current detection unit, the differential-mode current detection unit is connected to the positive output end or the negative output end of the battery cluster, and the differential-mode current detection unit is configured to detect a differential-mode current in a connected circuit; and
the controller is further configured to: when a frequency domain component of the differential-mode current is greater than a second preset amplitude, control the path between the output end of the battery cluster and the output end of the energy storage system to be cut off.

3. The energy storage system according to claim 2, wherein the energy storage system further comprises a DC-DC conversion circuit, a positive input end of the DC-DC conversion circuit is connected to the positive output end of the battery cluster, and a negative input end of the DC-DC conversion circuit is connected to the negative output end of the battery cluster;
the differential-mode current detection unit comprises a positive differential-mode current detection unit or a negative differential-mode current detection unit;
the positive differential-mode current detection unit is connected to the positive input end of the DC-DC conversion circuit, or the positive differential-mode current detection unit is connected to a positive output end of the DC-DC conversion circuit; and
the negative differential-mode current detection unit is connected to the negative input end of the DC-DC conversion circuit, or the negative differential-mode current detection unit is connected to a negative output end of the DC-DC conversion circuit.

4. The energy storage system according to claim 3, wherein the positive differential-mode current detection unit or the negative differential-mode current detection unit is any one of a shunt and a current transformer.

5. The energy storage system according to any one of claims 1 to 4, wherein the energy storage system further comprises the DC-DC conversion circuit, the positive input end of the DC-DC conversion circuit is connected to the positive output end of the battery cluster, and the negative input end of the DC-DC conversion circuit is connected to the negative output end of the battery cluster; and
one end of the common-mode current detection unit is connected to the positive input end of the DC-DC conversion circuit, and the other end of the common-mode current detection unit is connected to the negative input end of the DC-DC conversion circuit; or one end of the common-mode current detection unit is connected to the positive output end of the DC-DC conversion circuit, and the other end of the common-mode current detection unit is connected to the negative output end of the DC-DC conversion circuit.

6. The energy storage system according to any one of claims 1 to 5, wherein the energy storage system further comprises a first switch, a second switch, and a DC-AC conversion circuit, a positive input end of the DC-AC conversion circuit is connected to the positive output end of the battery cluster, and a negative input end of the DC-AC conversion circuit is connected to the negative output end of the battery cluster;
one end of the first switch is connected to the positive output end of the battery cluster, and the other end of the first switch is connected to the positive input end of the DC-AC conversion circuit;
one end of the second switch is connected to the negative output end of the battery cluster, and the other end of the second switch is connected to the negative input end of the DC-AC conversion circuit; and
the controller is configured to: when the frequency domain component of the common-mode current is greater than the first preset amplitude, control the first switch and the second switch to be turned off.

7. The energy storage system according to claim 6, wherein the energy storage system further comprises the DC-DC conversion circuit, the positive input end of the DC-DC conversion circuit is connected to the positive output end of the battery cluster, the negative input end of the DC-DC conversion circuit is connected to the negative output end of the battery cluster, the positive output end of the DC-DC conversion circuit is connected to the positive input end of the DC-AC conversion circuit, and the negative output end of the DC-DC conversion circuit is connected to the negative input end of the DC-AC conversion circuit; and
one end of the first switch is connected to the positive output end of the battery cluster, and the other end of the first switch is connected to the positive input end of the DC-DC conversion circuit; or one end of the first switch is connected to the positive output end of the DC-DC conversion circuit, and the other end of the first switch is connected to the positive input end of the DC-AC conversion circuit.

8. The energy storage system according to claim 6 or 7, wherein the energy storage system further comprises the DC-DC conversion circuit, the positive input end of the DC-DC conversion circuit is connected to the positive output end of the battery cluster, the negative input end of the DC-DC conversion circuit is connected to the negative output end of the battery cluster, the positive output end of the DC-DC conversion circuit is connected to the positive input end of the DC-AC conversion circuit, and the negative output end of the DC-DC conversion circuit is connected to the negative input end of the DC-AC conversion circuit; and
one end of the second switch is connected to the negative output end of the battery cluster, and the other end of the first switch is connected to the negative input end of the DC-DC conversion circuit; or one end of the second switch is connected to the negative output end of the DC-DC conversion circuit, and the other end of the second switch is connected to the negative input end of the DC-AC conversion circuit.

9. The energy storage system according to any one of claims 6 to 8, wherein the first switch or the second switch is at least one of a relay, a contactor, and a circuit breaker.

10. The energy storage system according to any one of claims 1 to 9, wherein the common-mode current detection unit is a residual current operated protective device, a current transformer, or a Hall effect sensor.

11. A battery cluster, comprising one or more battery modules, a common-mode current detection unit, and a controller, wherein the one or more battery modules are connected in series, wherein
one end of the common-mode current detection unit is connected to a positive output end of the one or more battery modules, and the other end of the common-mode current detection unit is connected to a negative output end of the one or more battery modules;
the common-mode current detection unit is configured to detect a common-mode current in a connected circuit; and
the controller is configured to: when a frequency domain component of the common-mode current is greater than a first preset amplitude, control the battery cluster not to output electric energy to the outside.

12. The battery cluster according to claim 11, wherein the battery cluster further comprises a differential-mode current detection unit, the differential-mode current detection unit is connected to the positive output end or the negative output end of the one or more battery modules, and the differential-mode current detection unit is configured to detect a differential-mode current in a connected circuit; and
the controller is further configured to: when a frequency domain component of the differential-mode current is greater than a second preset amplitude, control the battery cluster not to output electric energy to the outside.

13. The battery cluster according to claim 11 or 12, wherein the battery cluster further comprises a first switch and a second switch, wherein
one end of the first switch is connected to the positive output end of the one or more battery modules, and the other end of the first switch is connected to a positive output end of the battery cluster;
one end of the second switch is connected to the negative output end of the one or more battery modules, and the other end of the second switch is connected to a negative output end of the battery cluster; and
the controller is configured to: when the frequency domain component of the common-mode current is greater than the first preset amplitude, control the first switch and the second switch to be turned off.

14. An energy storage system, comprising the battery cluster according to any one of claims 11 to 13 and a power conversion circuit, wherein the power conversion circuit is electrically connected to the battery cluster; and
the power conversion circuit is configured to convert a direct current provided by the battery cluster into an alternating current and then output the alternating current, or convert an input alternating current into a direct current and then output the direct current to the battery cluster.

15. A photovoltaic energy storage device, comprising a photovoltaic power generation apparatus, an inverter, and the energy storage system according to any one of claims 1 to 10 or claim 14, wherein the inverter is connected to the photovoltaic power generation apparatus and the energy storage system, wherein
the photovoltaic power generation apparatus is configured to generate a direct current; and
the inverter is configured to convert the direct current generated by the photovoltaic power generation apparatus into an alternating current, and then transmit the alternating current to the energy storage system.
